# EUROPÄISCHE PATENTSCHRIFT

(11) **EP 4 182 622 B1**
(45) Veröffentlichungstag und Bekanntmachung des Hinweises auf die Patenterteilung: **01.11.2023**
(21) Anmeldenummer: 22726002.3
(22) Anmeldetag: 25.04.2022
(51) Int. Cl.: F27B 1/02, C04B 2/12, F27B 1/10, F27D 17/00, F27B 1/00

(54) **GLEICHSTROM-GEGENSTROM-REGENERATIV-SCHACHTOFEN UND VERFAHREN ZUM BRENNEN VON KARBONATGESTEIN**
PARALLEL-FLOW REGENERATIVE SHAFT KILN AND METHOD FOR BURNING CARBONATE ROCK
FOUR À CUVE À RÉGÉNÉRATION À COURANT PARALLÈLE ET À CONTRE-COURANT ET PROCÉDÉ DE CALCINATION DE ROCHES CARBONATÉES

(30) Priorität: 27.04.2021 DE 102021204176; 27.04.2021 BE 202105326
(43) Veröffentlichungstag der Anmeldung: 24.05.2023
(73) Patentinhaber: Maerz Ofenbau AG, 8002 Zürich (CH); thyssenkrupp Polysius GmbH, 59269 Beckum (DE); thyssenkrupp AG, 45143 Essen (DE)
(72) Erfinder: PIRINGER, Hannes, 5712 Beinwil am See (CH); BUCHER, Patrick, 5012 Schönenwerd (CH); WALLIMANN, Roger, 8004 Zürich (CH); SCHEFER, Dirk, 59320 Ennigerloh (DE)
(74) Vertreter: thyssenkrupp Intellectual Property GmbH
(86) Internationale Anmeldenummer: PCT/EP2022/060929
(87) Internationale Veröffentlichungsnummer: WO 2022/229118

(56) Entgegenhaltungen:
- CN-U- 201 620 107
- DE-A1- 2 657 239
- DE-A1- 3 833 069
- DE-A1- 19 845 495
- US-A1- 2020 048 146

## Beschreibung

Die Erfindung betrifft einen Gleichstrom-Gegenstrom-Regenerativ-Schachtofen (GGR-Schachtofen) sowie ein Verfahren zum Brennen und Kühlen von Material, wie Karbonatgesteinen, mit einem GGR-Schachtofen.

Das Brennen von Karbonatgestein in einem GGR-Schachtofen ist seit etwa 60 Jahren bekannt. Ein derartiger, beispielsweise aus der WO 2011/072894 A1 bekannter GGR-Schachtofen weist zwei vertikale, parallele Schächte auf, die zyklisch arbeiten, wobei nur in einem Schacht, dem jeweiligen Brennschacht, gebrannt wird, während der andere Schacht als Regenerativschacht arbeitet. Dem Brennschacht werden Oxidationsgas im Gleichstrom mit dem Material und Brennstoff zugeführt, wobei die dabei entstehenden heißen Abgase zusammen mit der von unten zugeführten, erwärmten Kühlluft über den Überstromkanal in den Abgasschacht geleitet werden, wo die Abgase im Gegenstrom zum Material nach oben abgeleitet werden und das Material dabei vorwärmen. Das Material wird üblicherweise von oben zusammen mit dem Oxidationsgas in den Schacht aufgegeben, wobei Brennstoffe in der Brennzone eingedüst werden.

Solche Schachtöfen von GGR-Typ sind aus DE-A2657239, CN201620107U sowie DE-A 3833069 bekannt.

Das zu brennende Material passiert üblicherweise in jedem Schacht eine Vorwärmzone zum Vorwärmen des Materials, eine sich daran anschließende Brennzone, in der das Material gebrannt wird und eine sich daran anschließende Kühlzone, in der Kühlluft dem heißen Material zugeführt wird.

Um den Qualitätsanforderungen bezüglich einer hohen Reaktivität des Branntkalkes, wie sie beispielsweise in Stahlwerken gefordert wird, gerecht zu werden, dürfen die Temperaturen in der Brennzone einen Wert von 1100°C, vorzugsweise 1000°C, nicht überschreiten. Des Weiteren steigt die Nachfrage nach umweltfreundlicher Herstellung von Branntkalk ebenfalls, sodass bestimmte Anforderungen an den CO2-Gehalt des Abgases zur anschließenden Nachbehandlung erfüllt werden müssen.

Davon ausgehend ist es Aufgabe der vorliegenden Erfindung, einen GGR-Schachtofen und ein Verfahren zum Brennen von Karbonatgestein mit einem GGR-Schachtofen bereitzustellen, mit welchem Kalk mit einer hohen Reaktivität bei gleichzeitiger CO2-Abscheidung aus dem Abgas ermöglicht wird.

Diese Aufgabe wird erfindungsgemäß durch eine Vorrichtung mit den Merkmalen des unabhängigen Verfahrensanspruchs 1 und durch ein Verfahren mit den Merkmalen des unabhängigen Vorrichtungsanspruchs 10 gelöst. Vorteilhafte Weiterbildungen ergeben sich aus den abhängigen Ansprüchen.

Nach einem ersten Aspekt umfasst die Erfindung ein Verfahren zum Brennen und Kühlen von Material, wie Karbonatgesteinen, in einem Gleichstrom-Gegenstrom-Regenerativ-Schachtofen mit zwei Schächten, die abwechselnd als Brennschacht und als Regenerativschacht betrieben werden und mittels eines Verbindungskanals miteinander verbunden sind. Das Material strömt in dem GGR-Schachtofen durch einen Materialeinlass in eine Vorwärmzone zum Vorwärmen des Materials, eine Brennzone zum Brennen des Materials und eine Kühlzone zum Kühlen des Materials zu einem Materialauslass, wobei ein Kühlgas in die Kühlzone eingelassen wird. In dem als Brennschacht betriebenen Schacht ist eine Gleichstrombrennzone ausgebildet. Das Abgas wird über einen innerhalb oder oberhalb der Vorwärmzone angeordneten Abgasauslass aus einem der Schächte ausgelassen, wobei das über den Abgasauslass aus dem Schacht ausgelassene Abgas zumindest teilweise in zumindest einen der Schächte eingeleitet wird. Das Abgas wird beispielsweise direkt in einen der Schächte oder indirekt über den Verbindungskanal eingeleitet.

Bei dem zu brennenden Material handelt es sich vorzugsweise um Kalkstein oder Dolomitstein mit einer Korngröße von 10 bis 200mm, vorzugsweise von 15 bis 120mm, höchstvorzugsweise 30 bis 100mm. Bei dem Kühlgas handelt es sich beispielsweise um Luft.

Der Gleichstrom-Gegenstrom-Regenerativ-Schachtofen weist mindestens zwei Schächte auf, die vorzugsweise parallel zueinander und vertikal angeordnet sind. Die Schächte sind abwechselnd als Brennschacht und als Regenerativschacht betreibbar, wobei jeder Schacht in Strömungsrichtung des Materials eine Vorwärmzone zum Vorwärmen des Materials, eine Brennzone zum Brennen des Materials und eine Kühlzone zum Kühlen des Materials aufweist. Jeder Schacht weist vorzugsweise einen Materialeinlass zu Einlassen von zu brennendem Material in den Schacht auf, wobei sich der Materialeinlass insbesondere am oberen Ende des jeweiligen Schachts befindet, sodass das Material schwerkraftbedingt in den jeweiligen Schacht fällt. Der Materialeinlass und/ oder der Materialauslass ist/sind insbesondere als Schleuse zum Einlassen und/ oder Auslassen von Material in den Schachtofen ausgebildet. Ein als Schleuse ausgebildeter Materialeinlass ist vorzugsweise derart ausgestaltet, dass lediglich das zu brennende Rohmaterial in den Schacht gelangt, nicht aber die Umgebungsluft. Auch ein Austreten von Gas über den Materialeinlass aus dem Schacht wird durch die Materialschleuse verhindert. Vorzugsweise ist die Schleuse derart ausgebildet, dass sie den Schacht luftdicht gegen die Umgebung abdichtet und einen Eintritt von Feststoffen, wie das zu brennende Gut, in den Schacht erlaubt.

Der Verbindungskanal ist zur gastechnischen Verbindung der beiden Schächte ausgebildet und verbindet vorzugsweise die Brennzonen der Schächte miteinander. Im Betrieb des GGR-Schachtofens wird jeweils einer der Schächte als Brennschacht betrieben und ist aktiv, wobei der jeweils andere Schacht als Regenerativschacht betrieben wird und passiv ist. Der GGR-Schachtofen wird insbesondere zyklisch betrieben, wobei nach Ablauf der Zykluszeit die Funktion der Schächte getauscht wird. Dieser Vorgang wiederholt sich fortlaufend. In dem als Brennschacht betriebenen, aktiven Schacht wird über die Brennerlanzen ein Brennstoff in die Brennzone eingeleitet. Das zu brennende Material wird in der Vorwärmzone des Brennschachts vorzugsweise auf eine Temperatur von etwa 700°C erwärmt. In dem als Brennschacht betriebenen Schacht ist die Brennzone als Gleichstrombrennzone ausgebildet, wobei das zu brennende Material parallel zu dem Gas strömt. Das Gas strömt innerhalb des Brennschachts von der Vorwärmzone in die Brennzone und anschießend über den Verbindungskanal in die Brennzone und die Vorwärmzone des Regenerativschachts. In dem als Regenerativschacht betriebenen Schacht strömt das Gas in der Vorwärmzone und der Brennzone im Gegenstrom zu dem zu brennenden Material.

Sowohl in dem Brennschacht als auch in dem Regenerativschacht wird Kühlgas im Gegenstrom zu dem zu kühlenden Material durch die Kühlzone geleitet und vorzugsweise vollständig über den Kühlgasauslass der Kühlluftabzugseinrichtung aus dem Schacht ausgelassen, sodass vorzugsweise kein Kühlgas von der Kühlzone in die Brennzone strömt.

Jeder Schacht weist vorzugsweise zumindest einen Abgasauslass, beispielsweise an dem oberen Ende des Schachts innerhalb der Vorwärmzone, auf. Vorzugsweise ist der Abgasauslass oberhalb der Materialsäule in einem materialfreien Bereich der Vorwärmzone angeordnet. Das Abgas wird vorzugsweise ausschließlich aus einem Schacht, insbesondere dem Regenerativschacht, ausgelassen. Das ausgelassene Abgas wird vorzugsweise dem jeweils anderen Schacht, insbesondere dem Brennschacht, und/ oder über den Verbindungskanal dem Regenerativschacht zugeführt. Vorzugsweise wird lediglich ein Teil des aus dem Regenerativschacht ausgelassenen Abgases zumindest einem Schacht wieder zugeführt. Ein Teil des aus dem Regenerativschacht ausgelassenen Abgases wird beispielsweise aus dem GGR-Schachtofen abgeführt und beispielweise einer weiteren Behandlung, wie einer Sequestrierung, zugeführt. Das Abgas besteht vorzugsweise aus CO₂ und optional H₂O.

Eine Rückführung des Abgases in zumindest einen Schacht ermöglicht die Herstellung von Kalk mit einer hohen Reaktivität, wobei gleichzeitig Prozessgas mit einem CO2-Gehalt von mehr als 90% bezogen auf trockenes Gas hergestellt wird. Bei einem solchen Prozessabgas ist es möglich, dieses mit geringerem Aufwand zu verflüssigen und zu sequestrieren. Beispielsweise wird das verflüssigte Prozessabgas weiteren Verfahrensschritten zugeführt oder gelagert. Alternativ kann mit dem vorangehend beschriebenen GGR-Schachtofen auch Abgas mit weniger CO2-Gehalt, beispielsweise 45% für die Sodaherstellung oder 35% für die Zuckerherstellung oder 30% für die Herstellung von gefälltem Kalziumkarbonat, erzeugt werden.

Gemäß einer ersten Ausführungsform wird das Abgas in die Vorwärmzone des als Brennschacht betriebenen Schachts eingeleitet. Vorzugsweise weist jeder Schacht einen Gaseinlass, insbesondere einen Verbrennungsgaseinlass auf, der in dem oberen Bereich des Schachts in der Vorwärmzone angeordnet ist und dem Einlass des zur Verbrennung benötigten Gases dient. Vorzugsweise ist der Gaseinlass oberhalb der Materialsäule in eine materialfreien Raum der Vorwärmzone angeordnet. Dem Verbrennungsgaseinlass ist vorzugsweise ein Regelorgan, wie eine Klappe oder ein mengenregulierbarer Verdichter, vorgeschaltet, über welches die Menge an Abgas und/ oder Oxidationsmittel in den Schacht einstellbar ist. Das über den Abgasauslass aus dem Schacht ausgelassene Abgas weist vorzugsweise eine Temperatur von etwa 60°C - 160°C, insbesondere 100°C auf. Vorzugsweise wird lediglich ein Teil des Abgases in die Vorwärmzone des Brennschachtes eingeleitet. Eine Rückführung der Abgase in die Vorwärmzone bietet die Möglichkeit der Erhöhung der Gasmenge in dem Schacht, wobei gleichzeitig eine hohe CO2-Konzentration in dem Abgas sichergestellt wird.

Gemäß einer weiteren Ausführungsform wird das Abgas in den Verbindungskanal und/ oder in die Brennzone des als Regenerativschacht oder Brennschacht betriebenen Schachts eingeleitet. Der Verbindungskanal ist vorzugsweise als materialfreier Raum ausgebildet, in dem Gas des Brennschachts zu dem Regenerativschacht strömt. Ein Einleiten des Abgases in den Verbindungskanal ermöglicht eine gleichmäßige Vermischung des Abgases mit den Gasen der Brennzone des Brennschachtes, da in dem Verbindungskanal kein Material vorhanden ist. Vorzugsweise wird lediglich ein Teil des Abgases in den Verbindungskanal und/ oder in die Brennzone des Regenerativschachts eingeleitet.

Gemäß einer weiteren Ausführungsform wird das Abgas vor dem Einleiten in den Schacht, insbesondere in den Verbindungskanal oder in die Brennzone des als Regenerativschacht oder Brennschacht betriebenen Schachts, insbesondere auf eine Temperatur von 900°C bis 1100°C, vorzugsweise 1000°C, erhitzt wird. Vorzugsweise wird das Abgas in zwei Schritten erhitzt, wobei in einem ersten Schritt ein Erhitzen auf etwa 600°C und in einem weiteren Schritt ein Erhitzen auf etwa 1000°C erfolgt. Die Schritte erfolgen beispielsweise in separaten Vorrichtungen, wie beispielsweise einem elektrischen Heizgerät oder Wärmetauscher.

Bei dem Wärmetauscher handelt es sich beispielsweise um einen als Regenerator ausgebildeten Wärmetauscher oder um einen als Rekuperator ausgebildete Wärmetauscher. Der Rekuperator ist beispielsweise ein Gegenstrom-Rekuperator, wobei das Abgas im Gegenstrom zu einem Fluid, wie beispielsweise das über die Kühlgasabzugseinrichtung abgezogene Kühlgas, erwärmt wird. Der Rekuperator ist beispielsweise ein Plattenwärmeübertrager oder ein Rohrbündelwärmeübertrager. Vorzugsweise wird ein als Regenerator ausgebildeter Wärmetauscher zyklisch betrieben. Der Wärmetauscher umfasst beispielsweise zwei Regeneratoren, die parallel zueinander geschaltet und jeweils über ein jeweiliges Ventil mit der Abgasleitung und der Kühlgasabzugsleitung verbunden sind. Jeweils genau einer der Regeneratoren wird von dem abgezogenen Kühlgas durchströmt, um den Regenerator zu erwärmen. Der jeweils andere Regenerator wird mit dem zu erwärmenden Abgas durchströmt. Nach einer bestimmten Zeit, insbesondere bei einem Umschalten der Schächte zwischen dem Brenn- und dem Regenerationsbetrieb, werden die Betriebsweisen der Regeneratoren umgeschaltet, sodass der jeweils andere Regenerator mit dem zu erwärmenden Abgas dem abgezogenen Kühlgas durchströmt wird. Der Vorteil eines Regenerators im Vergleich zu einem Rekuperator, welcher beispielsweise als Rohrbündelwärmetauscher ausgeführt ist, besteht darin, dass der Regenerator die Wärme in keramischen Materialien speichert und deswegen bei hohen Temperaturen nicht korrodiert oder verzundert.

Gemäß einer weiteren Ausführungsform wird das Abgas mittels eines Wärmetauschers und/ oder einer Heizeinrichtung, insbesondere einer elektrischen Heizvorrichtung, einer Solareinrichtung oder eines Verbrennungsreaktors, erhitzt. Beispielsweise wird das Abgas ausschließlich von einem Wärmetauscher oder einer Heizeinrichtung erhitzt. Es ist ebenfalls denkbar, dass das Abgas in einem ersten Schritt von einem Wärmetauscher auf eine Temperatur von beispielsweise etwa 600°C und anschließend in einer Heizvorrichtung auf eine Temperatur von etwa 1000°C erhitzt wird.

Die Heizvorrichtung ist vorzugsweise zur indirekten Erwärmung oder zur direkten Erwärmung, beispielsweise mittels eines Oxyfuel Brenners, ausgebildet. Die Heizvorrichtung umfasst beispielsweise eine elektrische Heizvorrichtung, einen elektrischen Durchströmerhitzer, eine Solareinrichtung, einen Verbrennungsreaktor und/ oder einen Wärmetauscher und ist insbesondere mit erneuerbaren Energiequellen betreibbar. Bei der Heizvorrichtung handelt es sich beispielsweise um eine elektrisch betriebene Heizvorrichtung. Insbesondere wird die Heizvorrichtung mittels Solarenergie betrieben und umfasst vorzugsweise einen Solarreceiver, insbesondere eine Photovoltaikanlage zur Erzeugung von elektrischer Energie mittels Solarenergie. Die Heizeinrichtung umfasst beispielsweise eine Solarthermie-Anlage, wobei beispielsweise ein Wärmetauscherfluid mittels Solarenergie erhitzt wird und in einem Wärmetauscher vorzugsweise im Gegenstrom zu dem rezirkulierten Abgas dieses erhitzt. Beispielsweise umfasst die Heizvorrichtung einen Solarreceiver, der das rezirkulierte Abgas insbesondere direkt erhitzt. Der Solarreceiver umfasst dazu beispielsweise einen Teil der Abgasauslassleitung. Die Heizvorrichtung weist beispielsweise einen Verbrennungsreaktor auf, der vorzugsweise zur Verbrennung von erneuerbaren Energieträgern, wie beispielsweise Holz, ausgebildet ist, wobei an Stelle von Luft vorzugsweise Sauerstoff zugeführt wird um den Eintrag von Stickstoff zu vermeiden. Vorzugsweise umfasst die Heizvorrichtung einen Wärmetauscher zur Erhitzung des Abgases im Gegenstrom zu einem Wärmeträgerfluid. Das Wärmeträgerfluid wird beispielsweise mittels Solarenergie und/ oder dem Verbrennungsreaktor erhitzt.

Gemäß einer weiteren Ausführungsform wird das in der Kühlzone erwärmte Kühlgas über eine Kühlgasabzugseinrichtung aus der Kühlzone des Schachts ausgelassen. Insbesondere wird das in die Kühlzone eingelassene Kühlgas vollständig über die Kühlgasabzugseinrichtung aus dem jeweiligen Schacht ausgelassen. Das Kühlgas wird vorzugsweise von unten über einen im unteren Bereich der Kühlzone angeordnete Kühlgaseinlass in die Kühlzone eingelassen. Die Kühlgasabzugseinrichtung weist vorzugsweise einen Kühlgasauslass zum Auslassen des Kühlgases aus dem Schacht auf. Der Kühlgasauslass ist insbesondere mit einer Kühlgasabzugsleitung zum Leiten des abgezogenen Kühlgases verbunden.

Gemäß einer weiteren Ausführungsform wird das aus der Kühlzone ausgelassene Kühlgas einem Wärmetauscher zur Erwärmung des Abgases zugeführt wird. Das über den Abgasauslass abgezogene Abgas wird vorzugsweise vor dem Einleiten in den Verbindungskanal und/ oder die Brennzone des Regenerativschachts im Gegenstrom durch das abgezogene Kühlgas erwärmt. Vorzugsweise wird das Abgas mittels des Wärmetauschers auf eine Temperatur von 400°C bis 800°C, insbesondere 600°C erwärmt.

Gemäß einer weiteren Ausführungsform wird dem als Brennschacht betriebenen Schacht ein Oxidationsmittel zugeführt. Bei dem Oxidationsmittel handelt es sich beispielswiese um reinen Sauerstoff oder um sauerstoffreiches Gas mit einem Sauerstoffanteil von mindestens 70 bis 95%, vorzugsweise 90%. Das Oxidationsmittel wird vorzugsweise zusammen mit dem Abgas in die Vorwärmzone des Brennschachtes eingeleitet. Es ist ebenfalls denkbar, dass der Schacht in der Vorwärmzone einen separaten Oxidationsmitteleinlass zum Einlassen des Oxidationsmittels separat zu dem Abgas in den Schacht aufweist.

Gemäß einer weiteren Ausführungsform wird der Gehalt an Sauerstoff und/oder CO₂ in dem Abgas und/ oder des Kühlgases ermittelt, wobei die Menge an dem Brennschacht zugeführtem Oxidationsmittel und/ oder die Menge an über die Kühlgasabzugseinrichtung aus der Kühlzone des Schachts ausgelassenem Kühlgas geregelt wird.

Der GGR-Schachtofen weist vorzugsweise eine Gasanalyseeinrichtung zur Ermittlung des Sauerstoff- und/ oder den CO₂-Gehalts in dem Abgas und/ oder Kühlgas auf. Die Gasanalyseeinrichtung ist beispielsweise in der Abgasleitung, insbesondere stromabwärts der Abzweigung der Verbrennungsgasleitung angeordnet. Optional oder zusätzlich ist eine Gasanalyseeinrichtung in der Kühlgasabzugsleitung, insbesondere stromabwärts des Wärmetauschers und beispielsweise des Filters angeordnet.

Die Gasanalyseeinrichtung ist insbesondere mit einer Regelungseinrichtung zur Übermittlung des ermittelten Sauerstoff- und/ oder den CO₂-Gehalts des Abgases und/ oder des Kühlgases verbunden.

Die Oxidationsmittelleitung weist vorzugsweise ein Regelorgan auf, wie beispielsweise ein Ventil oder eine Klappe, über das die Menge an Oxidationsmittel in den jeweiligen Schacht einstellbar ist. Das Regelorgan ist vorzugsweise mit der Regeleinrichtung verbunden, wobei die Regeleinrichtung insbesondere derart ausgebildet ist, dass sie die Menge an Oxidationsmittel in den Schacht in Abhängigkeit des mittels der Gasanalyseeinrichtung ermittelten Sauerstoff- und/ oder den CO₂-Gehalts des Abgases regelt. Die Regelungseinrichtung ist vorzugsweise derart ausgebildet, dass die den mittels der Gasanalyseeinrichtung ermittelten Sauerstoff- und/ oder den CO₂-Gehalt mit einem jeweiligen vorabbestimmten Grenzwert oder Grenzbereich vergleicht und bei einer Abweichung des ermittelten Wertes von dem Grenzwert oder Grenzbereich, die Menge an Oxidationsmittel in den Schacht erhöht oder verringert.

Die Regelung dient insbesondere einer vollständigen Verbrennung des Brennstoffes, der über die Brennstoffleitung dem GGR-Schachtofen zugeführt wird. Ein unerwünscht hoher Sauerstoffanteil in der Abgasleitung wird damit verhindert. Zur Kontrolle des gewünschten CO₂-Gehalts in der Abgasleitung, wird der CO₂-Gehalt ebenfalls gemessen.

Die Kühlgasabzugsleitung weist vorzugsweise ein Regelorgan auf, wie beispielsweise ein Ventil oder eine Klappe, über das die Menge an über die Kühlgasabzugseinrichtung abzuführendem Kühlgas einstellbar ist. Das Regelorgan ist vorzugsweise mit der Regeleinrichtung verbunden, wobei die Regeleinrichtung insbesondere derart ausgebildet ist, dass sie die Menge an über die Kühlgasabzugseinrichtung abgeführtem Kühlgas in Abhängigkeit des mittels der Gasanalyseeinrichtung ermittelten Sauerstoff- und/ oder den CO₂-Gehalts des Kühlgases regelt. Die Regelungseinrichtung ist vorzugsweise derart ausgebildet, dass die den mittels der Gasanalyseeinrichtung ermittelten Sauerstoff- und/ oder den CO₂-Gehalt mit einem jeweiligen vorabbestimmten Grenzwert oder Grenzbereich vergleicht und bei einer Abweichung des ermittelten Wertes von dem Grenzwert oder Grenzbereich, die Menge über die Kühlgasabzugseinrichtung abzuführendem Kühlgas erhöht oder verringert.

Die Regelung dient insbesondere einem möglichst vollständigen Abzug des Kühlgases aus dem GGR-Schachtofen bei einem gleichzeitig möglichst geringen oder vorzugsweise keinem CO₂ in der Kühlgasabzugsleitung.

Gemäß einer weitere Ausführungsform weisen die Schächte jeweils zumindest eine Brennerlanze auf, wobei das Abgas in die Brennerlanze eingeleitet wird. Der Brennzone und/ oder der Vorwärmzone des als Brennschacht betriebenen Schachts wird vorzugsweise ein Brennstoff über eine Brennstoffleitung zugeführt. Vorzugsweise wird der Brennstoff Brennerlanzen zugeführt, die in der Brennzone und/ oder der Vorwärmzone angeordnet sind. Bei dem Brennstoff handelt es sich beispielsweise um ein Brenngas, wie Hochofengas oder Erdgas oder Kohlenstaub oder Biomasse oder flüssige Brennstoffe. In der Brennzone wird das Material vorzugsweise auf eine Temperatur von etwa 1100°C erhitzt. Insbesondere wird das Abgas in die Brennstoffleitung eingeleitet. Die Abgasleitung ist dazu vorzugsweise mit der Brennstoffleitung und/ oder der zumindest einen Brennerlanze verbunden. Vorzugsweise wird das Abgas im Anschluss an den Wärmetauscher in die Brennerlanze und/ oder die Brennstoffleitung eingeleitet, wobei es sich bei dem Wärmetauscher vorzugsweise um den Wärmetauscher zur Erwärmung des Abgases im Gegenstrom zu dem abgezogenen Kühlgas handelt. Vorzugsweise wird das Abgas zwischen diesem Wärmetauscher und der Einleitung in die Brennerlanze und/ oder Brennstoffleitung nicht weiter erwärmt, insbesondere ist keine voran beschriebene Heizeinrichtung vorgesehen. Das Abgas wird vorzugsweise über ein Regelorgan, wie einer Klappe oder einem Ventil, zur Einstellung der Menge Abgas in die Brennerlanze und/ oder die Brennstoffleitung in diese eingeleitet. Jeder Brennstoffleitung und/ oder Brennerlanze ist vorzugsweise ein Regelorgan zugeordnet, zur Einstellung der Menge an Abgas in die jeweilige Brennerlanze und/ oder Brennstoffleitung. Vorzugsweise ist das Regelorgan in der Abgasleitung angeordnet. Insbesondere wird das Abgas in die Brennerlanzen des als Brennschacht betriebenen Schachts eingeleitet. Die Einleitung des Abgases in die Brennerlanzen und/ oder die Brennstoffleitung ermöglicht einen Verzicht auf die Heizeinrichtung, da das Abgas zusammen mit dem Brennstoff direkt erhitzt wird. Diese Ausführung stellt daher eine kostengünstige Lösung dar.

Jeder Schacht weist vorzugsweise eine Mehrzahl von Brennerlanzen auf, die sich zumindest teilweise durch die Vorwärmzone erstrecken und insbesondere in die Brennzone des jeweiligen Schachts münden und zum Leiten von beispielsweise Brennstoff und/ oder einem Oxidationsgas, wie Luft oder mit Sauerstoff angereicherte Luft oder reinem Sauerstoff, dienen.

Die Erfindung umfasst auch einen Gleichstrom-Gegenstrom-Regenerativ-Schachtofen zum Brennen und Kühlen von Material, wie Karbonatgesteinen. Die mit Bezug auf das Verfahren zum Brennen von Material, wie Karbonatgesteinen, in einem Gleichstrom-Gegenstrom-Regenerativ-Schachtofen beschriebenen Ausführungsformen und Vorteile treffen in vorrichtungsgemäßer Entsprechung ebenfalls auf den GGR-Schachtofen zu.

Der GGR-Schachtofen umfasst mit zwei Schächte, die abwechselnd als Brennschacht und als Regenerativschacht betrieben werden und mittels eines Verbindungskanals miteinander verbunden sind. Jeder Schacht weist in Strömungsrichtung des Materials eine Vorwärmzone zum Vorwärmen des Materials, eine Brennzone zum Brennen des Materials und eine Kühlzone zum Kühlen des Materials auf. Jeder Schacht weist des Weiteren einen innerhalb oder oberhalb der Vorwärmzone angeordneten Abgasauslass zum Auslassen von Abgas aus dem Schacht auf. Der zumindest ein Abgasauslass ist mit einem Gaseinlass zum Einlassen von Gas in zumindest einen Schacht verbunden. Vorzugsweise weist der GGR-Schachtofen eine Mehrzahl von Gaseinlässen zum Einlassen von aus zumindest einem der Schächte abgezogenem Abgas auf. Der GGR-Schachtofen ist derart ausgebildet und eingerichtet, dass in dem als Brennschacht betriebenen Schacht eine Gleichstrombrennzone ausgebildet ist.

Gemäß einer Ausführungsform ist der Gaseinlass in der Vorwärmzone des als Brennschacht betriebenen Schachts angeordnet ist. Bei dem Gaseinlass in der Vorwärmzone des Brennschachtes handelt es sich vorzugsweise um einen Verbrennungsgaseinlass, über welchen zusätzlich zu dem Abgas vorzugsweise ein Oxidationsmittel in die Vorwärmzone eingeleitet wird. Der Gaseinlass ist vorzugsweise an dem oberen Ende der Vorwärmzone angeordnet.

Gemäß einer weiteren Ausführungsform ist der Gaseinlass in dem Verbindungskanal zur gastechnischen Verbindung der Brennzonen der Schächte angeordnet und/ oder in der Brennzone des Schachts, insbesondere des Regenerativschachts oder des Brennschachts, und/ oder in einem materialfreien Raum in dem Schacht angeordnet. Insbesondere ist der materialfreie Raum als außenliegender Ringraum ausgebildet, der sich umfangsmäßig um vorzugsweise den oberen, an die Brennzone angrenzenden Bereich der Kühlzone erstreckt.

Gemäß einer weiteren Ausführungsform ist zwischen dem Abgasauslass und dem Gaseinlass in dem Verbindungskanal zur gastechnischen Verbindung der Brennzonen der Schächte und/ oder in der Brennzone ein Wärmetauscher und/ oder eine Heizeinrichtung, insbesondere eine elektrische Heizvorrichtung, eine Solareinrichtung oder ein Verbrennungsreaktor, zum Erwärmen des Abgases angeordnet. Beispielsweise ist der Wärmetauscher in Strömungsrichtung des Abgases vor der Heizvorrichtung angeordnet. Es ist ebenfalls denkbar, dass lediglich ein Wärmetauscher oder eine Heizvorrichtung zur Erwärmung des Abgases vorhanden sind.

Gemäß einer weiteren Ausführungsform weist die Kühlzone einen Kühlgaseinlass zum Einlassen von Kühlgas in die Kühlzone und eine Kühlgasabzugseinrichtung zum Abführen von Kühlgas aus dem Schacht auf.

Die Kühlgasabzugseinrichtung weist gemäß einer weiteren Ausführungsform einen materialfreien Raum innerhalb der Kühlzone des Schachts auf. Insbesondere ist der materialfreie Raum als außenliegender Ringraum ausgebildet, der sich umfangsmäßig um vorzugsweise den oberen, an die Brennzone angrenzenden Bereich der Kühlzone erstreckt. In dem materialfreien Ringraum ist insbesondere der Kühlgasauslass angeordnet.

Der materialfreie Raum der Kühlgasabzugseinrichtung ist beispielsweise als Innenzylinder ausgebildet, der sich insbesondere mittig und in vertikaler Richtung durch die Kühlzone erstreckt. Insbesondere erstreckt sich der Innenzylinder zumindest teilweise in die Brennzone hinein. In dem Innenzylinder ist der Kühlgasauslass zum Auslassen des Kühlgases aus dem Schacht angeordnet. Der Innenzylinder weist vorzugsweise einen Kühlgaseinlass zum Einlassen von Kühlgas der Kühlzonen in das Innere des Innenzylinders auf, wobei der Kühlgaseinlass vorzugsweise oberhalb des Kühlgasauslasses in dem Innenzylinder angeordnet ist. Insbesondere ist der Kühlgaseinlass am oberen Ende der Kühlzone angeordnet, sodass das Kühlgas vorzugsweise durch die gesamte Kühlgaszone und anschließend in den Innenzylinder der Kühlgasabzugseinrichtung strömt. Innerhalb des Innenzylinders strömt das Kühlgas vorzugsweise nach unten in Richtung des Kühlgasauslasses und in die Kühlgasabzugsleitung. Eine als Innenzylinder ausgebildete Kühlgasabzugseinrichtung ermöglicht eine geringe Bauhöhe der Kühlzone und ein vergleichsweise einfaches Umrüsten von bekannten GGR-Schachtöfen.

Der materialfreie Raum der Kühlgasabzugseinrichtung ist beispielsweise als Verbindungskanal zur gastechnischen Verbindung der Kühlzonen der beiden Schächte ausgebildet, wobei der Kühlgasauslass vorzugsweise in dem Verbindungskanal, insbesondere mittig angeordnet ist.

Die Kühlgasabzugseinrichtung ist vorzugsweise derart ausgebildet, dass sie das gesamte Kühlgas aus dem Schacht auslässt, sodass vorzugsweise kein Kühlgas in die Brennzone oder den Verbindungskanal zur Verbindung der Brennzonen der Schächte gelangt. Insbesondere ist die Kühlgasabzugseinrichtung mit einem Regelorgan, wie einer Klappe oder einem Ventil, zur Einstellung der Menge an abzuziehendem Kühlgas verbunden.

Gemäß einer weiteren Ausführungsform ist die Kühlgasabzugseinrichtung mit einem Wärmetauscher zur Erwärmung des Abgases verbunden. Die Kühlgasabzugseinrichtung Ist insbesondere mittels der Kühlgasabzugsleitung mit dem Wärmetauscher verbunden. Der Wärmetauscher dient vorzugsweise der Erwärmung des Abgases, das über den Abgasauslass aus der Vorwärmzone des Regenerativschachts ausgelassen wurde. Der Wärmetauscher ist insbesondere mit dem Abgasauslass und dem Kühlgasauslass der Kühlgasabzugseinrichtung verbunden.

Gemäß einer weiteren Ausführungsform weist jeder Schacht einen Verbrennungsgaseinlass zum Einlassen von Verbrennungsgas in die Vorwärmzone und/ oder die Brennzone auf, wobei der Verbrennungsgaseinlass mit einer Oxidationsmittelleitung zur Leitung eines Oxidationsmittels in den Schacht verbunden ist. Der Verbrennungsgaseinlass ist vorzugsweise mit dem Abgasauslass zur Leitung des Abgases in den Schacht verbunden.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung eines GGR-Schachtofens in einer Schnittansicht gemäß einem Ausführungsbeispiel.
- Fig. 2a: zeigt eine schematische Darstellung eines GGR-Schachtofens in einer Schnittansicht gemäß einem weiteren Ausführungsbeispiel.
- Fig. 2b bis 2f: zeigen schematische Darstellungen des GGR-Schachtofens der Fig. 2a in Querschnittsansichten in den in Fig. 2a markierten Schnittebenen.
- Fig. 3a: zeigt eine schematische Darstellung eines GGR-Schachtofens in einer Schnittansicht gemäß einem weiteren Ausführungsbeispiel.
- Fig. 3b bis 3e: zeigen schematische Darstellungen des GGR-Schachtofens der Fig. 3a in einer Längs- und weiteren Querschnittsansichten in den in Fig. 3a markierten Schnittebenen.
- Fig. 4a - c: zeigt eine schematische Darstellung eines GGR-Schachtofens in einer perspektivischen Ansicht und zwei Schnittansichten gemäß einem weiteren Ausführungsbeispiel.
- Fig. 4d bis 4h: zeigen schematische Darstellungen des GGR-Schachtofens der Fig. 4a-c in einer Längs- und weiteren Querschnittsansichten in den in Fig. 4b und c markierten Schnittebenen.
- Fig. 5: zeigt eine schematische Darstellung eines GGR-Schachtofens in einer Schnittansicht gemäß einem weiteren Ausführungsbeispiel.

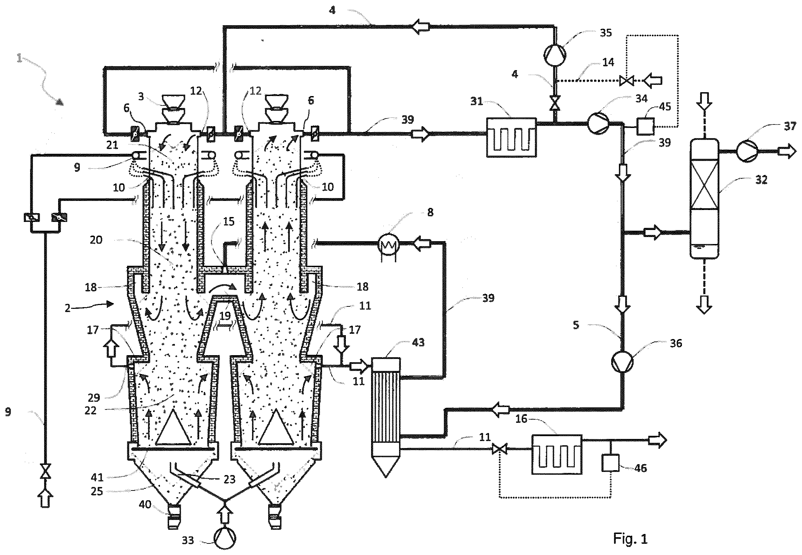

Fig. 1 zeigt einen GGR-Schachtofen 1 mit zwei parallelen und vertikal ausgerichteten Schächten 2. Die Schächte 2 des GGR-Schachtofens 1 sind im Wesentlichen identisch aufgebaut, sodass in Fig. 1 leidglich einer der beiden Schächte 2 mit Bezugszeichen versehen ist und im Folgenden der Einfachheit halber lediglich einer der beiden Schächte 2 beschrieben ist. Jeder Schacht 2 weist jeweils einen Materialeinlass 3 auf zum Einlassen von zu brennenden Material in den jeweiligen Schacht 2 des GGR-Schachtofens 1. Bei dem zu brennenden Material handelt es sich insbesondere um Kalkstein und/ oder Dolomitstein vorzugsweise mit einer Korngröße von 10 bis 200mm, vorzugsweise von 15 bis 120mm, höchstvorzugsweise 30 bis 100mm. Die Materialeinlässe 3 sind beispielhaft an dem oberen Ende des jeweiligen Schachts 2 angeordnet, sodass das Material durch den Materialeinlass 3 schwerkraftbedingt in den Schacht 2 fällt. Der Materialeinlass 3 ist beispielsweise als obere Öffnung des Schachts 2 und insbesondere als Schleuse 3 ausgebildet und erstreckt sich vorzugsweise über den gesamten oder einen Teil des Querschnitts des Schachts 2. Ein als Schleuse 3 ausgebildeter Materialeinlass ist vorzugsweise derart ausgestaltet, dass lediglich das zu brennende Rohmaterial in den Schacht 2 gelangt, nicht aber die Umgebungsluft. Vorzugsweise ist die Schleuse 3 derart ausgebildet, dass sie den Schacht 2 luftdicht gegen die Umgebung abdichtet und einen Eintritt von Feststoffen, wie das zu brennende Gut, in den Schacht erlaubt.

Jeder Schacht 2 weist an seinem oberen Ende des Weiteren einen Verbrennungsgaseinlass 12 zum Einlassen von Verbrennungsgas zur Verbrennung von Brennstoffen auf. Bei dem Verbrennungsgas handelt es sich beispielsweise um entstaubtes Abgas zumindest eines der Schächte 2, wobei das Abgas vorzugsweise mit Sauerstoff angereichert ist. Des Weiteren weist jeder Schacht 2 einen Abgasauslass 6 zum Auslassen von Abgasen aus dem jeweiligen Schacht 2 auf. Jedem Abgasauslass 6 und Verbrennungsgaseinlass 12 ist beispielhaft jeweils ein Regelorgan zugeordnet. Über die Regelorgane, wie beispielsweise einem mengenregulierbarem Verdichter 35, ist vorzugsweise die Menge an Verbrennungsgas in den jeweiligen Verbrennungsgaseinlass 12 und die Menge an über den jeweiligen Abgasauslass 6 abzuziehendes Abgas einstellbar. Der Verbrennungsgaseinlass 12 und der Abgasauslass sind beispielhaft auf dem gleichen Höhenniveau und insbesondere innerhalb der Vorwärmzone 21 des jeweiligen Schachts 2 angeordnet.

Am unteren Ende des Schachts 2 ist ein Materialauslass 40 zum Abführen des gebrannten Materials angeordnet. Bei dem Materialauslass 40 handelt es sich beispielsweise um eine wie mit Bezug auf den Materialeinlass 3 beschriebene Schleuse. Das gebrannte Material wird beispielsweise in einen Auslasstrichter 25 geleitet, an den sich der Materialauslass 40 des Schachts 2 anschließt. Der Auslasstrichter 25 ist beispielhaft trichterförmig ausgebildet. Der Auslasstrichter 25 weist vorzugsweise einen Kühlgaseinlass 23 zum Einlassen von Kühlgas in den jeweilige Schacht 2 auf. Das Kühlgas wird vorzugsweise mittels eines Verdichters 33 in den Kühlgaseinlass geleitet.

Im Betrieb des GGR-Schachtofens 1 strömt das zu brennende Material von oben nach unten durch den jeweiligen Schacht 2, wobei die Kühlluft von unten nach oben, im Gegenstrom zu dem Material, durch den jeweiligen Schacht 2 strömt. Das Ofenabgas wird durch den Abgasauslass 6 aus dem Schacht 2 abgeführt.

Unterhalb des Materialeinlasses 3 und des Verbrennungsgaseinlasses 12 schließt sich in Strömungsrichtung des Materials die Vorwärmzone 21 des jeweilige Schachtes 2 an. In der Vorwärmzone 21 wird das Material und das Verbrennungsgas vorzugsweise auf etwa 700°C vorgewärmt. Vorzugsweise ist der jeweilige Schacht 2 mit zu brennendem Material gefüllt. Das Material wird vorzugsweise oberhalb der Vorwärmzone 21 in den jeweiligen Schacht 2 aufgegeben. Zumindest ein Teil der Vorwärmzone 21 und der sich in Strömungsrichtung des Materials daran anschließende Teil des jeweiligen Schachtes 2 sind beispielsweise mit einer feuerfesten Auskleidung umgeben.

In der Vorwärmzone 21 sind optional eine Mehrzahl von Brennerlanzen 10 angeordnet und dienen jeweils als Einlass für Brennstoff, wie beispielsweise ein Brenngas, Öl oder gemahlener fester Brennstoff. Der GGR-Schachtofen 1 weist beispielsweise eine Kühleinrichtung zur Kühlung der Brennerlanzen 10 auf. Die Kühleinrichtung umfasst beispielsweise eine Mehrzahl von Kühlluftringleitungen, die sich ringförmig um den Schachtbereich erstrecken, in dem die Brennerlanzen 10 angeordnet sind. Durch die Kühlluftringleitungen strömt vorzugsweise Kühlluft zur Kühlung der Brennerlanzen 10. Vorzugsweise werden die Brennerlanzen 10 mittels des über den Abgasauslass 6 abgeführten Abgases gekühlt. Vorzugsweise ist der Abgasauslass 6 mit den Brennerlanzen 10 zur Leitung von Abgas zu den Brennerlanzen 10 verbunden.

Vorzugsweise sind in jedem Schacht 2 eine Mehrzahl, beispielsweise zwölf oder mehr Brennerlanzen 10 und im Wesentlichen gleichmäßig zueinander beabstandet angeordnet. Die Brennerlanzen 10 weisen beispielsweise eine L-Form auf und erstrecken sich vorzugsweise in horizontaler Richtung in den jeweiligen Schacht 2 hinein und innerhalb des Schachtes 2 in vertikaler Richtung, insbesondere in Strömungsrichtung des Materials. Die Enden der Brennerlanzen 10 eines Schachtes 2 sind vorzugsweise alle auf demselben Höhenniveau angeordnet. Vorzugsweise ist die Ebene, an der die Lanzenenden angeordnet sind, jeweils das untere Ende der jeweiligen Vorwärmzone 21. Die Brennerlanzen 10 sind vorzugsweise mit einer Brennstoffleitung 9 zur Leitung von Brennstoff zu den Brennerlanzen 10 verbunden. Die Brennstoffleitung 9 ist beispielshaft zumindest teilweise als Ringleitung ausgebildet, die sich umfangsmäßig um den jeweiligen Schacht 2 herum erstreckt. Vorzugsweise weist jeder Schacht 2 eine jeweils den Brennerlanzen 10 des Schachts 2 zugeordnete Brennstoffleitung auf, die insbesondere jeweils ein Regelorgan zur Einstellung der Brennstoffmenge zu den Brennerlanzen 10 aufweist.

An die Vorwärmzone 21 schließt sich in Strömungsrichtung des Materials die Brennzone 20 an. In der Brennzone 20 wird der Brennstoff verbrannt und das vorgewärmte Material bei einer Temperatur von etwa 1000°C gebrannt. Der GGR-Schachtofen 1 weist des Weiteren einen Verbindungskanal 19 zum gastechnischen Verbinden der beiden Schächte 2 miteinander auf. In dem Verbindungskanal 19 ist insbesondere kein zu brennendes Material vorhanden.

Die Fig. 1 zeigt beispielhaft einen GGR-Kalkofen 1 mit runden Schachtquerschnitten. Der Schachtquerschnitt kann jedoch eine andere geometrische Kontur aufweisen, wie beispielsweise rund, halbrund, oval, viereckig oder vieleckig. Die Brennzone 20 erstreckt sich beispielhaft in einem ersten und einem zweiten Schachtabschnitt, wobei der erste Schachtabschnitt einen im Wesentlichen konstanten oder nach unten geringfügig grösser werdenden Querschnitt aufweist. An den ersten Schachtabschnitt schließt sich in Strömungsrichtung des Materials ein zweiter Schachtabschnitt an, der einen sich in Strömungsrichtung des Materials verringernden Schachtquerschnitt aufweist. Der erste Schachtabschnitt erstreckt sich mit seinem unteren Bereich in den oberen Bereich des zweiten Schachtabschnitts hinein, sodass sich ein Ringkanal 18 zwischen den beiden Schachtabschnitten ausbildet. Der Ringkanal 18 bildet einen materialfreien Raum aus, in dem kein zu brennendes Material angeordnet ist. Der zweite Schachtabschnitt weist in seinem oberen Bereich einen größeren Querschnitt als der erste Schachtabschnitt auf, wobei sich der Querschnitt des zweiten Schachtabschnitts in Strömungsrichtung des Materials auf den Querschnitt des ersten Schachtabschnitts reduziert und vorzugsweise das untere Ende der Brennzone 20 ausbildet. Der Ringkanal 18 erstreckt sich vorzugsweise umfangsmäßig um den unteren Bereich des ersten Schachtabschnitts der Brennzone 20. Die Schächte 2 der Fig. 1 weisen beispielsweise jeweils einen Ringkanal 18 auf, die mit dem Verbindungskanal 19 verbunden sind.

An die Brennzone 20 schließt sich in Strömungsrichtung des Materials in jedem Schacht 2 eine Kühlzone 22 an, die sich bis zum Materialauslass 40 erstreckt. Die Kühlzone ist in einem Schachtabschnitt mit einem im Wesentlichen konstanten oder nach unten kleiner werdendem Querschnitt ausgebildet. Der Querschnitt des Schachtabschnitts der Kühlzone 22 ist größer als der Querschnitt des unteren Bereichs der Brennzone 20, sodass sich an dem oberen Ende der Kühlzone 22 und angrenzend an die Brennzone 20 ein weiterer materialfreier Raum 17, insbesondere ein ringförmiger Absatz ausbildet, in dem kein Material angeordnet ist. Das Material wird innerhalb der Kühlzone 22 auf etwa 100°C im Gegenstrom zu dem Material strömendem Kühlgas abgekühlt. Am unteren Ende der Kühlzone 22 ist eine vorzugsweise kegelförmige Strömungseinrichtung angeordnet, die zur Leitung des Materials in Richtung der Schachtwand dient.

Jede Kühlzone 22 weist jeweils eine Kühlluftauslassvorrichtung 17 mit jeweils einem Kühlgasauslass 29 auf. In dem Ausführungsbeispiel der Fig. 1 ist die Kühlluftauslassvorrichtung 17 als materialfreier, insbesondere ringförmiger Raum 17 ausgebildet. Der Kühlgasauslass 29 ist vorzugsweise in der Schachtwand des materialfreien Raums 17 am oberen Ende der Kühlzone 22 angeordnet. Das über den Kühlgaseinlass 23 in die Kühlzone 22 strömende Kühlgas strömt vorzugsweise vollständig aus dem Kühlgasauslass 29 der Kühlluftauslassvorrichtung 17 aus dem jeweiligen Schacht 2 heraus.

An dem materialauslassseitigen Ende eines jeden Schachtes 2 ist vorzugsweise eine Austragseinrichtung 41 angeordnet. Die Austragseinrichtungen 41 umfassen beispielsweise horizontale Platten, vorzugsweise einen Austragstisch, die einen seitlichen Durchtritt des Materials zwischen dem Austragstisch und der Gehäusewand des GGR-Schachtofens erlauben. Die Austragseinrichtung 41 ist vorzugsweise als Schub- oder Drehtisch oder als Tisch mit Schubräumer ausgeführt. Dies ermöglicht eine gleichmäßige Durchsatzgeschwindigkeit des Brennguts durch die Schächte 2. Die Austragseinrichtung 41 umfasst des Weiteren beispielhaft den Auslasstrichter 25, der sich an den Austragstisch anschließt und an dessen unterem Ende der Materialauslass 40 angebracht ist.

Im Betrieb des GGR-Schachtofens 1 ist jeweils einer der Schächte 2 aktiv, wobei der jeweils andere Schacht 2 passiv ist. Der aktive Schacht 2 wird als Brennschacht und der passive Schacht 2 als Regenerativschacht bezeichnet. Der GGR-Schachtofen 1 wird insbesondere zyklisch betrieben, wobei eine übliche Zykluszahl beispielsweise 75 bis 150 Zyklen pro Tag beträgt. Nach Ablauf der Zykluszeit wird die Funktion der Schächte 2 getauscht. Dieser Vorgang wiederholt sich fortlaufend. Über die Materialeinlässe 3 wird abwechselnd Material wie Kalk- oder Dolomitstein in die Schächte 2 aufgegeben. In dem als Brennschacht betriebenen, aktiven Schacht 2 wird über die Brennerlanzen 10 ein Brennstoff in den Brennschacht 2 eingeleitet. Das zu brennende Material wird in der Vorwärmzone 21 des Brennschachts auf eine Temperatur von etwa 700°C erwärmt. In dem Ausführungsbeispiel der Fig. 1 wird der linke Schacht 2 als Brennschacht betrieben, wobei der rechte Schacht 2 als Regenerativschacht betrieben wird.

Im Betrieb des GGR-Schachtofens 1 strömt sowohl in dem Brennschacht 2 als auch in dem Regenerativschacht 2 das Kühlgas im Gegenstrom zu dem zu kühlenden Material durch die Kühlzone 22 und wird vorzugsweise vollständig über den Kühlgasauslass 29 aus dem Schacht 2 ausgelassen, sodass vorzugsweise kein Kühlgas von der Kühlzone 22 in die Brennzone 20 strömt.

Innerhalb des als Brennschacht betriebenen Schachts 2 strömt das Verbrennungsgas durch den Verbrennungsgaseinlass 12 in den Brennschacht und im Gleichstrom mit dem Material innerhalb der Brennzone 20 in den als Ringkanal 18 ausgebildeten materialfreien Raum. Von dem materialfreien Raum 18 strömt das Gas über den Verbindungskanal 19 in den als Regenerativschacht betriebenen Schacht 2. Innerhalb des Regenerativschachts strömt das Gas von dem Verbindungskanal 19 und dem materialfreien Raum 18 des Regenerativschachts im Gegenstrom zu dem zu brennenden Material durch die Brennzone 20 in die Vorwärmzone 21 und verlässt den Regenerativschacht durch den Abgasauslass 6 des Regenerativschachts. Vorzugsweise weist das aus dem Schacht 2 ausgelassene Abgas eine Temperatur von 60°C bis 160°C, vorzugsweise 100°C auf.

Das Abgas wird in eine sich an den Abgasauslass 6 anschließende Abgasleitung 39 geleitet. Die Abgasleitung 39 weist in Strömungsrichtung des Abgases im Anschluss an den Abgasauslass 6 optional einen Abgasfilter 31 zum Filtern von feinen Partikeln, insbesondere Staub, aus dem Abgas auf. Stromabwärts des Abgasfilters 31 weist die Abgasleitung 39 eine Abzweigung auf, wobei ein Teil des Abgases in einer Verbrennungsgasleitung 4 zu dem Verbrennungsgaseinlass 12 geleitet wird. Stromabwärts der Abzweigung weist die Verbrennungsgasleitung 4 in Strömungsrichtung des Abgases beispielhaft ein Regelorgan, wie beispielsweise eine Drosselklappe, und einen Verdichter 35 auf. Die Verbrennungsgasleitung 4 ist vorzugsweise mit den Verbrennungsgaseinlässen 12 der Schachte 2 verbunden, wobei über ein dem Verbrennungsgaseinlass 12 vorgeschaltetes Regelorgan vorzugsweise lediglich dem Verbrennungsgaseinlass 12 des als Brennschacht betriebenen Schachts 2 das Abgas zugeführt wird. Die Verbrennungsgasleitung 4 ist vorzugsweise mit einer Oxidationsmittelleitung 14 verbunden, sodass ein Oxidationsmittel, vorzugsweise reiner Sauerstoff, in die Verbrennungsgasleitung 4 und anschließend zusammen mit dem Abgas über den Verbrennungsgaseinlass 12 in den Schacht 2 eingeführt wird. Es ist ebenfalls denkbar, dass als Oxidationsmittel ein sauerstoffreiches Gas mit einem Sauerstoffanteil von mindestens 70 bis 95%, vorzugsweise 90% in die Verbrennungsgasleitung 4 eingeführt wird.

Der Teil des Abgases, der nicht zu dem Verbrennungsgaseinlass 12 zurückgeführt wird, wird in der Abgasleitung 39 einem Gaseinlass 15 in dem Verbindungskanal 19 zugeführt. Die Abgasleitung 39 weist stromabwärts der Abzweigung der Verbrennungsgasleitung 4 in Strömungsrichtung des Abgases vorzugsweise einen mengenregulierbaren Verdichter 36, einen Wärmetauscher 43 und optional eine Heizeinrichtung 8 zur Erwärmung des Abgases auf. Der Wärmetauscher 43 ist beispielhaft als Rekuperator ausgebildet, wobei das Abgas im Gegenstrom zu dem abgezogenen Kühlgas erwärmt wird und sich das Kühlgas gleichzeitig abkühlt. Der Wärmetauscher 43 ist insbesondere über eine Kühlgasabzugsleitung 11 mit den Kühlgasauslässen 29 beider Schachte 2 verbunden, sodass das Abgas in dem Wärmetauscher 43 mittels des abgezogenen Kühlgases vorzugsweise im Gegenstrom erwärmt wird. Im Anschluss an den Wärmetauscher weist die Kühlgasabzugsleitung 11 optional ein Regelorgan zum Einstellen der abzuziehenden Kühlgasmenge und einen Filter 16 zum Entstauben des Kühlgases auf. Das Abgas wird in dem Wärmetauscher 43 und/ oder der Heizeinrichtung 8 vorzugsweise auf eine Temperatur von etwa 900°C bis 1100°C, insbesondere 1000°C erhitzt. Es ist ebenfalls denkbar, dass die Abgasleitung 39 lediglich einen Wärmetauscher 43 oder eine Heizeinrichtung 8 zur Erwärmung des Abgases aufweist. Beispielsweise wird das Abgas in dem Wärmetauscher 43 auf eine Temperatur von etwa 600°C und anschließend in der Heizeinrichtung 8 auf eine Temperatur von etwa 1000°C erhitzt.

Bei der Heizeinrichtung 8 handelt es sich beispielsweise um eine elektrisch betriebene Heizeinrichtung. Insbesondere wird die Heizeinrichtung mittels Solarenergie betriebenen. Es ist ebenfalls denkbar, dass die Heizeinrichtung 8 einen Wärmetauscher umfasst, wobei das im Gegenstrom strömende Wärmemittel über Solarenergie erhitzt wird. Die Heizeinrichtung 8 ist vorzugsweise als Verbrennungsreaktor zur Verbrennung von vorzugsweise erneuerbaren Energieträgern, wie Holz, ausgebildet, wobei die Verbrennung vorzugsweise derart erfolgt, dass das Verbrennungsgas einen hohen CO2-Anteil von mindestens 90% aufweist.

Stromaufwärts des Wärmetauschers 43 wird ein Teil des Abgases abgezweigt und über einen Kühleinrichtung 32 mittels eines Verdichters 37 abgeführt. Vorzugsweise wird gesamte CO2-Menge aus der Kalzinierung und der Verbrennung sowie das Wasser aus der Verbrennung aus dem GGR-Schachtofen 1 abgeführt. Die Kühleinrichtung 32 ist beispielsweise ein Wärmetauscher, der vorzugsweise mit einem Kühlmittel, wie Wasser, im Gegenstrom bestrieben wird. Die Abgasleitung weist beispielhaft vor und nach der Abzweigung des abzuführenden Abgases jeweils einen Verdichter 34, 36 auf.

Der Verbindungskanal 19 weist einen Gaseinlass 15 zum Einlassen von rezirkuliertem Abgas in den Verbindungskanal 19 auf. Der Gaseinlass 15 ist über die Abgasleitung 39 mit dem Abgasauslass 6 des Schachts 2 verbunden, sodass aus dem Schacht 2 abgeführtes, entstaubtes und erwärmtes Abgas in den Verbindungskanal 19 geleitet wird. Der Gaseinlass 15 ist beispielhaft mittig in der oberen Wand des Gaskanal 15 angeordnet. Es ist ebenfalls denkbar, dass der Gaseinlass 15 an einer davon abweichenden Position in der Wand des Verbindungskanals 19 oder in den Ringkanälen 18 angeordnet ist. Es ist ebenfalls denkbar, dass eine Mehrzahl von Gaseinlässen 15 in dem Verbindungskanal 19 oder in den Ringkanälen 18 angebracht sind, die jeweils mit der Abgasleitung 39 verbunden sind.

Fig. 1 zeigt des Weiteren beispielhaft zwei Gasanalyseeinrichtungen 45, 46. Die Gasanalyseeinrichtungen 45, 46 sind derart ausgebildet, dass sie jeweils den Sauerstoff- und/ oder den CO₂-Gehalt des jeweiligen Gases ermitteln. Eine Gasanalyseeinrichtung 45 ist beispielhaft in der Abgasleitung 39 stromabwärts der Abzweigung der Verbrennungsgasleitung 4 angeordnet und zur Ermittlung des Sauerstoff- und/ oder den CO₂-Gehalt des Abgases ausgebildet. Die Gasanalyseeinrichtung 45 ist insbesondere mit einer nicht dargestellten Regelungseinrichtung zur Übermittlung des ermittelten Sauerstoff- und/ oder den CO2-Gehalts des Abgases verbunden.

Die Oxidationsmittelleitung 14 weist vorzugsweise ein Regelorgan auf, wie beispielsweise ein Ventil oder eine Klappe auf, über welches die Menge an Oxidationsmittel in die Verbrennungsgasleitung 4 einstellbar ist. Das Regelorgan ist vorzugsweise mit der Regeleinrichtung verbunden, wobei die Regeleinrichtung insbesondere derart ausgebildet ist, dass sie die Menge an Oxidationsmittel in die Verbrennungsgasleitung 4 in Abhängigkeit des mittels der Gasanalyseeinrichtung 45 ermittelten Sauerstoff- und/ oder den CO₂-Gehalts des Abgases regelt.

Die Regelung dient insbesondere einer vollständigen Verbrennung des Brennstoffes, der über die Brennstoffleitung 9 dem GGR-Schachtofen 1 zugeführt wird. Ein unerwünscht hoher Sauerstoffanteil in der Abgasleitung 39 wird damit verhindert. Zur Kontrolle des gewünschten CO₂-Gehalts in der Abgasleitung 39, wird der CO₂-Gehalt ebenfalls gemessen.

Die Regelungseinrichtung ist vorzugsweise derart ausgebildet, dass die den mittels der Gasanalyseeinrichtung 45 ermittelten Sauerstoff- und/ oder den CO₂-Gehalt mit einem jeweiligen vorabbestimmten Grenzwert oder Grenzbereich vergleicht und bei einer Abweichung des ermittelten Wertes von dem Grenzwert oder Grenzbereich, die Menge an Oxidationsmittel in die Verbrennungsgasleitung erhöht oder verringert.

Vorzugsweise wird die Menge an Oxidationsmittel erhöht, wenn der Grenzwert oder Grenzbereich des ermittelten Sauerstoffgehalts unterschritten wird. Vorzugsweise wird die Menge an Oxidationsmittel verringert, wenn der Grenzwert oder Grenzbereich des ermittelten Sauerstoffgehalts überschritten wird.

Eine Gasanalyseeinrichtung 46 ist beispielhaft in der Kühlgasabzugsleitung 11, insbesondere stromabwärts des Wärmetauschers 43 und beispielsweise des Filters 16 angeordnet und zur Ermittlung des Sauerstoff- und/ oder den CO₂-Gehalt des abgeführten Kühlgases ausgebildet. Die Gasanalyseeinrichtung 46 ist insbesondere mit der nicht dargestellten Regelungseinrichtung zur Übermittlung des ermittelten Sauerstoff- und/ oder den CO₂-Gehalts des Kühlgases verbunden.

Die Kühlgasabzugsleitung 11 weist vorzugsweise ein Regelorgan auf, wie beispielsweise ein Ventil oder eine Klappe auf, über welches die Menge an über die Kühlgasabzugseinrichtung 17 abzuführendem Kühlgas einstellbar ist. Das Regelorgan ist vorzugsweise mit der Regeleinrichtung verbunden, wobei die Regeleinrichtung insbesondere derart ausgebildet ist, dass sie die Menge an über die Kühlgasabzugseinrichtung 17 abgeführtem Kühlgas in Abhängigkeit des mittels der Gasanalyseeinrichtung 46 ermittelten Sauerstoff- und/ oder den CO₂-Gehalts des Kühlgases regelt.

Die Regelung dient insbesondere einem möglichst vollständigen Abzug des Kühlgases aus dem GGR-Schachtofen 1 bei einem gleichzeitig möglichst geringen oder vorzugsweise keinem CO₂ in der Kühlgasabzugsleitung 11.

Die Regelungseinrichtung ist vorzugsweise derart ausgebildet, dass die den mittels der Gasanalyseeinrichtung 46 ermittelten Sauerstoff- und/ oder den CO₂-Gehalt mit einem jeweiligen vorabbestimmten Grenzwert oder Grenzbereich vergleicht und bei einer Abweichung des ermittelten Wertes von dem Grenzwert oder Grenzbereich, die Menge über die Kühlgasabzugseinrichtung 17 abzuführendem Kühlgas erhöht oder verringert.

Vorzugsweise wird die Menge an Kühlgas erhöht, wenn der Grenzwert oder Grenzbereich des ermittelten CO₂-Gehalts unterschritten wird. Vorzugsweise wird die Menge an Kühlgas verringert, wenn der Grenzwert oder Grenzbereich des ermittelten CO₂-Gehalt überschritten wird.

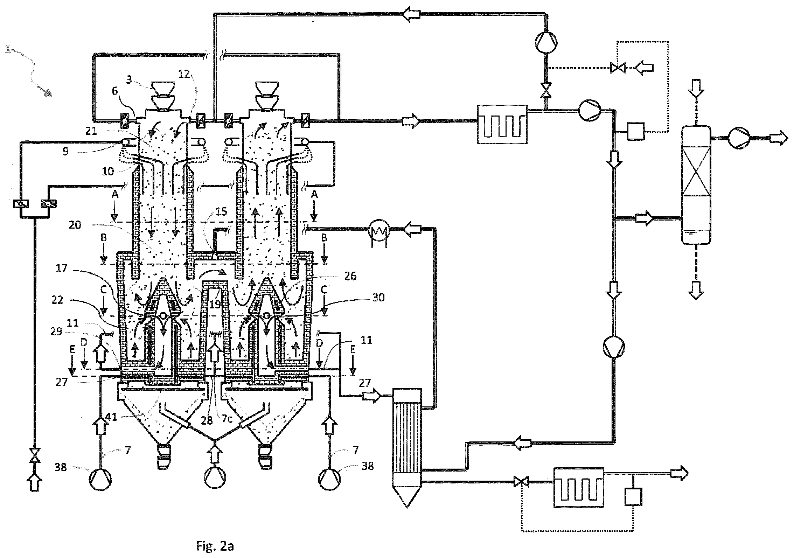

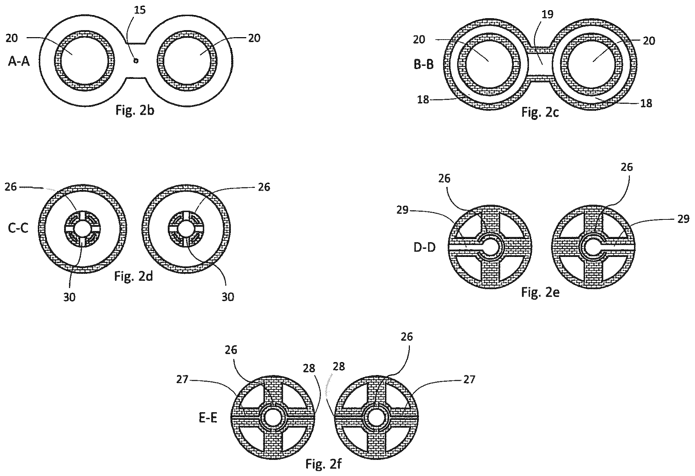

Fig. 2a zeigt ein weiteres Ausführungsbeispiel eines GGR-Schachtofens, wobei dieser größtenteils dem GGR-Schachtofen der Fig. 1 entspricht. Gleiche Elemente sind mit gleichen Bezugszeichen versehen. In dem GGR-Schachtofen 1 der Fig. 2a wird beispielhaft der linke Schacht 2 als Brennschacht betrieben. Im Unterschied zu dem GGR-Schachtofen der Fig. 1 weist der GGR-Schachtofen 1 der Fig. 2a eine Kühlgasabzugseinrichtung 17 auf, die einen Innenzylinder 26 umfasst, der sich von der Kühlzone 22 zumindest teilweise in die Brennzone 20 erstreckt und einen Kühlgasauslass 29 aufweist, der mit der Kühlgasabzugsleitung 11 verbunden ist. Fig. 2b bis 2f zeigen Querschnittsansichten des GGR-Schachtofens 1 in den in Fig. 2a markierten Schnittebenen.

Die Kühlzone 22 ist beispielhaft in einem Schachtabschnitt ausgebildet, der einen in etwa konstanten Querschnitt aufweist, wobei der Schachtquerschnitt der Kühlzone 22 dem Schachtquerschnitt dem unteren Bereich der Brennzone 20 entspricht. Der materialfreie Ringraum des GGR-Schachtofens der Fig. 1, ist daher in dem Ausführungsbeispiel der Fig. 2a nicht ausgebildet. Jeder Schacht 2 des GGR-Schachtofens 1 der Fig. 2a weist einen Innenzylinder 29 auf, der sich mittig in vertikaler Richtung durch die Kühlzone 22 erstreckt. Beispielhaft erstreckt sich der Innenzylinder 29 von der Austragseinrichtung 41 durch die Kühlzone 22 in die Brennzone 20 bis auf die Höhe des Verbindungskanals 19. Zur Kühlung des Innenzylinders 29 sind in dessen Außenwände eine Mehrzahl von Kühlluftkanälen ausgebildet, die mit einer Kühlluftleitung 7 zur Leitung von Kühlluft verbunden sind. Die Kühlluft wird vorzugsweise mittels eines Verdichters 38 über die Kühlluftleitung 7 in die Kühlluftkanäle des Innenzylinders 26 geleitet. Die erwärmte Kühlluft wird beispielhaft in die Kühlgasabzugsleitung 11 geleitet und vorzugsweise zur Erwärmung des Abgases in den Wärmetauscher 43 geführt. Die Innenzylinder 26 weisen jeweils einen sich radial nach außen erstreckenden Kühllufteinlass 27 und einen Kühlluftauslass 28, die mit der Kühlluftleitung 7 verbunden sind. Fig. 2f zeigt eine Querschnittansicht auf der in Fig. 2 eingezeichneten Schnittebene E-E durch die Kühllufteinlässe 27 und Kühlluftauslässe 28 des Innenzylinders 26.

Der Innenzylinder 26 der Kühlgasabzugseinrichtung 17 weist einen Kühlgasauslass 29 auf, der sich von dem Innenzylinder 26 radial nach außen durch die Schachtwand erstreckt und der Leitung von Kühlgas aus dem Innenzylinder in die Kühlgasabzugsleitung 11 dient. Fig. 2e zeigt eine Querschnittansicht auf der in Fig. 2a eingezeichneten Schnittebene D-D durch den Kühlgasauslass 29. Der Innenzylinder 26 weist des Weiteren einen Kühlgaseinlass 30 zum Einlassen von Kühlgas aus der Kühlzone 22 in den Innenzylinder 26 auf. Der Kühlgaseinlass 30 erstreckt sich durch die Innenzylinderwand in die Kühlzone 22 und verbindet das Innere des Innenzylinders 26 mit der Kühlzone 22. Fig. 2d zeigt eine Querschnittansicht auf der in Fig. 2a eingezeichneten Schnittebene C-C durch den Kühlgaseinlass 30. Beispielhaft weist jeder Innenzylinder 26 vier Kühlgaseinlässe 30 auf, die jeweils auf gleicher Höhe in der Innenzylinderwand ausgebildet sind und sich vorzugsweise gleichmäßig zueinander beabstandet sternförmig nach außen in die Kühlzone 22 erstrecken. Der Kühlgaseinlass 30 ist vorzugsweise oberhalb des Kühlgasauslasses 29 in der Kühlzone 22 angeordnet. Das Kühlgas strömt im Betrieb des GGR-Schachtofens 1 von unten nach oben durch die Kühlzone 22 und in den Kühlgaseinlass 30 in den Innenzylinder 26 der Kühlgasabzugseinrichtung 17. Vorzugsweise strömt das gesamte in die Kühlzone 22 eingeleitete Kühlgas durch die Kühlgaseinlässe 30 in die Kühlgasabzugseinrichtung 17, sodass kein Kühlgas in die Brennzone 20 gelangt. Der Kühlluftauslass 29 des Innenzylinders 26 ist vorzugsweise im unteren Bereich der Kühlzone 22 angeordnet. Das Kühlgas strömt insbesondere von dem Kühlgaseinlass 30 in dem Innenzylinder 26 nach unten zu dem Kühlgasauslass 29.

Die Leitung des aus der Kühlzone 22 abgezogenen Kühlgases und des aus der Vorwärmzone 21 abgezogenen Abgases entsprechen in dem Ausführungsbeispiel der Fig. 2a der mit Bezug auf Fig. 1 beschriebenen Verschaltung.

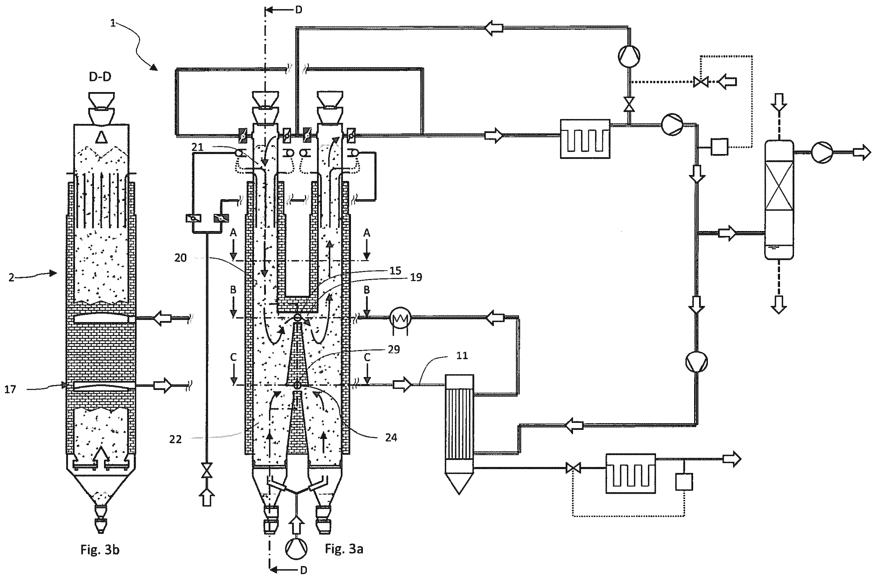

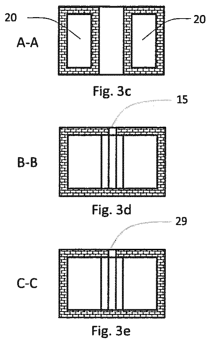

Fig. 3a und b zeigt ein weiteres Ausführungsbeispiel eines GGR-Schachtofens, wobei dieser größtenteils dem GGR-Schachtofen der Fig. 1 und 2 entspricht. Gleiche Elemente sind mit gleichen Bezugszeichen versehen. In dem GGR-Schachtofen 1 der Fig. 3 wird beispielhaft der linke Schacht 2 als Brennschacht betrieben. Im Unterschied zu dem GGR-Schachtofen der Fig. 1 und 2 weist der GGR-Schachtofen 1 der Fig. 3 eine Kühlgasabzugseinrichtung 17 auf, die einen weiteren Verbindungskanal 24 zur gastechnischen Verbindung der Kühlzonen 22 der beiden Schachte 2 umfasst. Der weitere Verbindungskanal 24 ist unterhalb des Verbindungskanals 19 zur gastechnischen Verbindung der Brennzonen 20 der beiden Schächte 2 angeordnet. Insbesondere ist der weitere Verbindungskanal 24 am oberen Ende der Kühlzone 22, vorzugsweise direkt unterhalb der Brennzone 20 angeordnet. In dem weiteren Verbindungskanal 24 ist der Kühlgasauslass 29 zum Auslassen des Kühlgases, insbesondere vollständig, aus den beiden Schächten 2 in die Kühlgasabzugsleitung 11. Beispielhaft ist der Kühlgasauslass 29 mittig innerhalb des weiteren Verbindungskanals 24 angeordnet. Fig. 3b zeigt eine Längsschnittdarstellung des GGR-Schachtofens der Fig. 3a an der in Fig. 3a dargestellten Schnittebene D-D. Fig. 3c bis Fig. 3e zeigen weitere Querschnittsansichten des GGR-Schachtofens 1 der Fig. 3a an den in der Fig. 3a angegebenen Schnittebenen. Beispielhaft weisen die Schächte 2 des Ausführungsbeispiels der Fig. 3 a bis e einen rechteckigen Querschnitt auf. Der Kühlgasauslass 29 erstreckt sich beispielhaft über die gesamte Breite des Querschnitts des Schachts 2 und aus der Schachtwand heraus.

Die Leitung des aus der Kühlzone 22 abgezogenen Kühlgases und des aus der Vorwärmzone 21 abgezogenen Abgases entsprechen in dem Ausführungsbeispiel der Fig. 3 der mit Bezug auf Fig. 1 beschriebenen Verschaltung.

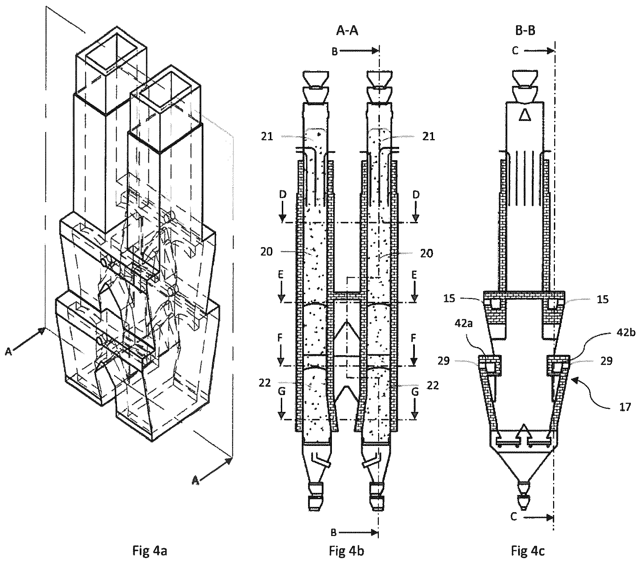

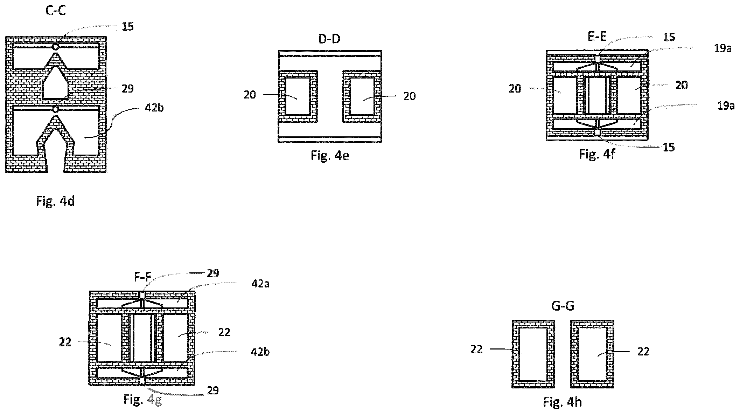

Fig. 4a-h zeigt ein weiteres Ausführungsbeispiel eines GGR-Schachtofens, wobei dieser größtenteils dem GGR-Schachtofen der Fig. 3 entspricht. Gleiche Elemente sind mit gleichen Bezugszeichen versehen. Im Unterschied zu dem GGR-Schachtofen der Fig. 3 weist der GGR-Schachtofen 1 der Fig. 4a-c eine Kühlgasabzugseinrichtung 17, die zwei Verbindungskanäle 42a,b umfasst auf. Die Verbindungskanäle 42a,b sind parallel zueinander angeordnet und erstrecken sich jeweils an gegenüberliegende Außenseiten der Schächte 2. Die Kühlzonen 22 der beiden Schächte 2 werden über zwei Verbindungskanäle 42a,b gastechnisch miteinander verbunden. Jeder Verbindungskanal 42a,b weist insbesondere jeweils einen Kühlgasauslass 29 auf, der mit einer in Fig. 4a-c nicht dargestellten Kühlgasabzugsleitung 11 verbunden ist. Fig. 4d zeigt eine Schnittansicht eines Verbindungskanal 42b an der in Fig. 4c eingezeichneten Schnittebene. Der Kühlgasauslass 29 ist beispielhaft mittig zwischen den beiden Schächten, vorzugsweise an der engsten Stelle des Verbindungskanals 42b ausgebildet. Insbesondere sind die Verbindungskanäle 42a,b identisch ausgebildet. Der Querschnitt, insbesondere die Höhe, der Verbindungskanäle 42 vergrößert sich in Richtung der Schächte, insbesondere nach unten in den jeweiligen Schacht 2 hinein und verringert sich zwischen den beiden Schächten 2. Die Breite der Verbindungskanäle 42a,b ist beispielhaft konstant.

Fig. 4e bis h zeigen Querschnittsansichten des GGR-Schachtofens 1 an den in Fig. 4c eingezeichneten Schnittebenen. Beispielhaft sind in dem Ausführungsbeispiel der Fig. 4a bis h die Brennzonen 20 der Schächte 2 ebenfalls über zwei parallele und außen an gegenüberliegenden Seiten der Schächte 2 angeordnete Verbindungskanäle 19a, b verbunden. Die Verbindungskanäle 19a,b und/ oder 42a,b zur Verbindung der Brennzonen 20 und der Kühlzonen 22 können optional umfangsmäßig um die beiden Schächte 2 herum angeordnet sein.

Die Leitung des aus der Kühlzone 22 abgezogenen Kühlgases und des aus der Vorwärmzone 21 abgezogenen Abgases entsprechen in dem Ausführungsbeispiel der Fig. 4 der mit Bezug auf Fig. 1 beschriebenen Verschaltung.

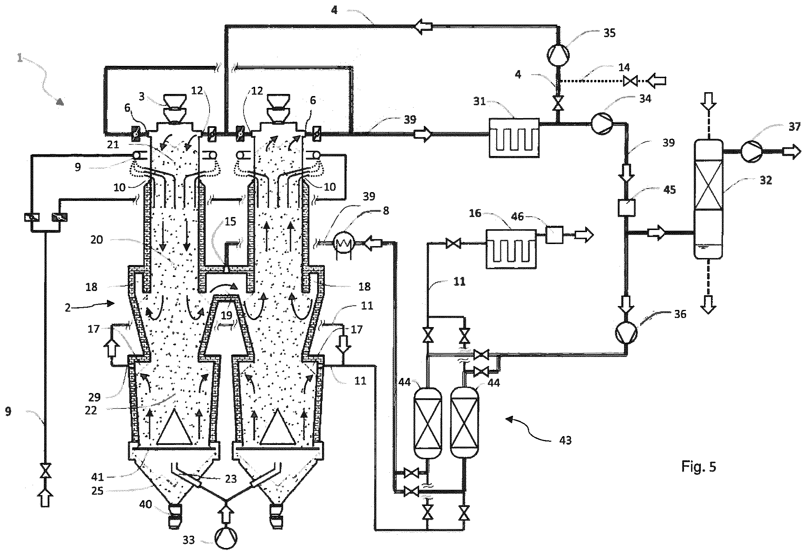

Fig. 5 zeigt ein weiteres Ausführungsbeispiel eines GGR-Schachtofens 1, wobei dieser größtenteils dem GGR-Schachtofen der Fig. 1 entspricht. Gleiche Elemente sind mit gleichen Bezugszeichen versehen. Im Unterschied zu dem Ausführungsbeispiel der Fig. 1 ist der GGR-Schachtofen 1 der Fig. 5 mit einem als Regenerator 44 ausgebildeten Wärmetauscher 43 versehen. Der Wärmetauscher 43 weist beispielhaft zwei Regeneratoren 44 auf, die parallel zueinander geschaltet sind. Die Regeneratoren 44 sind jeweils über ein jeweiliges Ventil, insbesondere ein Absperrventil, mit der Abgasleitung 39 und der Kühlgasabzugsleitung 11 verbunden. Im Betrieb des GGR-Schachtofen wird jeweils genau einer der Regeneratoren 44 von dem abgezogenen Kühlgas durchströmt, um den Regenerator 44 zu erwärmen. Der jeweils andere Regenerator 44 wird mit dem zu erwärmenden Abgas durchströmt. Nach einer bestimmten Zeit, insbesondere bei einem Umschalten der Schächte zwischen dem Brenn- und dem Regenerationsbetrieb, werden die Betriebsweisen der Regeneratorenn umgeschaltet, sodass der jeweils andere Regenerator mit dem zu erwärmenden Abgas dem abgezogenen Kühlgas durchströmt wird. Der mittels des abgezogenen Kühlgases erwärmte Regenerator 44 gibt dann die Wärme an das Abgas ab.

Der mit dem vorangehend beschriebenen GGR-Schachtofen 1 der Fig. 1 bis 4 hergestellte Kalk weist eine hohe Reaktivität auf, wobei gleichzeitig Prozessgas mit einem CO2-Gehalt von mehr als 90% bezogen auf trockenes Gas hergestellt wird. Bei einem solchen Prozessabgas ist es mit geringerem Aufwand möglich, dieses zu verflüssigen und zu sequestrieren. Beispielsweise wird das verflüssigte Prozessabgas weiteren Verfahrensschritten zugeführt oder gelagert. Alternativ kann mit dem vorangehend beschriebenen GGR-Schachtofen auch Abgas mit weniger CO2-Gehalt, beispielsweise 45% für die Sodaherstellung oder 35% für die Zuckerherstellung oder 30% für die Herstellung von gefälltem Kalziumkarbonat, erzeugt werden.

### Bezugszeichenliste

- 1: GGR-Schachtofen
- 2: Schacht
- 3: Materialeinlass / Schleuse
- 4: Verbrennungsgasleitung
- 6: Abgasauslass
- 7: Kühlluftleitung
- 8: Heizeinrichtung
- 9: Brennstoffleitung
- 10: Brennerlanzen
- 11: Kühlgasabzugsleitung
- 12: Verbrennungsgaseinlass
- 14: Oxidationsmittelleitung
- 15: Gaseinlass
- 16: Filter
- 17: materialfreier Raum / Kühlgasabzugseinrichtung
- 18: Ringkanal / materialfreier Raum
- 19: Verbindungskanal
- 20: Brennzone
- 21: Vorwärmzone
- 22: Kühlzone
- 23: Kühlgaseinlass
- 24: weiterer Verbindungskanal der Kühlzonen
- 25: Auslasstrichter
- 26: Innenzylinder
- 27: Kühllufteinlass
- 28: Kühlluftauslass
- 29: Kühlgasauslass
- 30: Kühlgaseinlass
- 31: Abgasfilter
- 32: Kühleinrichtung
- 33 - 38: Verdichter
- 39: Abgasleitung
- 40: Materialauslass / Schleuse
- 41: Austragseinrichtung
- 42a,b: Verbindungskanäle
- 43: Wärmetauscher / Rekuperator
- 44: Regenerator
- 45, 46: Gasanalyseeinrichtung

## Patentansprüche

1. Verfahren zum Brennen von Material, wie Karbonatgesteinen, in einem Gleichstrom-Gegenstrom-Regenerativ-Schachtofen (1) mit zwei Schächten (2), die abwechselnd als Brennschacht und als Regenerativschacht betrieben werden und mittels eines Verbindungskanals (19) miteinander verbunden sind, wobei das Material durch einen Materialeinlass (3) in eine Vorwärmzone (21) zum Vorwärmen des Materials, eine Brennzone (20) zum Brennen des Materials und eine Kühlzone (22) zum Kühlen des Materials zu einem Materialauslass (40) strömt, wobei in dem als Brennschacht betriebenen Schacht (2) eine Gleichstrombrennzone ausgebildet ist,
wobei ein Kühlgas in die Kühlzone eingelassen wird,
wobei Abgas über einen innerhalb oder oberhalb der Vorwärmzone (21) angeordneten Abgasauslass (6) aus einem der Schächte (2) ausgelassen wird und
**dadurch gekennzeichnet, dass**
das über den Abgasauslass (6) aus dem Schacht (2) ausgelassene Abgas zumindest teilweise in zumindest einen der Schächte (2) eingeleitet wird.

2. Verfahren nach Anspruch 1, wobei das Abgas in die Vorwärmzone (21) des als Brennschacht betriebenen Schachts (2) eingeleitet wird.

3. Verfahren nach einem der vorangehenden Ansprüche, wobei das Abgas in den Verbindungskanal (19) und/ oder in die Brennzone (20) des als Regenerativschacht betriebenen Schachts (2) eingeleitet wird.

4. Verfahren nach Anspruch 3, wobei das Abgas vor dem Einleiten in den Verbindungskanal (19) oder in die Brennzone (20) des als Regenerativschacht betriebenen Schachts (2), insbesondere auf eine Temperatur von 900°C bis 1100°C, vorzugsweise 1000°C, erhitzt wird.

5. Verfahren nach Anspruch 4, wobei das Abgas mittels eines Wärmetauschers (43) und/ oder einer Heizeinrichtung (8), insbesondere einer elektrischen Heizvorrichtung, einer Solareinrichtung oder eines Verbrennungsreaktors, erhitzt wird.

6. Verfahren nach einem der vorangehenden Ansprüche, wobei das in der Kühlzone (22) erwärmte Kühlgas über eine Kühlgasabzugseinrichtung (17) aus der Kühlzone (22) des Schachts (2) ausgelassen wird.

7. Verfahren nach Anspruch 5, wobei das aus der Kühlzone (22) ausgelassene Kühlgas einem Wärmetauscher (43) zur Erwärmung des Abgases zugeführt wird.

8. Verfahren nach einem der vorangehenden Ansprüche, wobei dem als Brennschacht betriebenen Schacht ein Oxidationsmittel zugeführt wird.

9. Verfahren nach einem der vorangehenden Ansprüche 6 oder 8, wobei der Gehalt an Sauerstoff und/oder CO₂ in dem Abgas und/ oder des Kühlgases ermittelt wird und wobei die Menge an dem Brennschacht zugeführtem Oxidationsmittel und/ oder die Menge an über die Kühlgasabzugseinrichtung (17) aus der Kühlzone (22) des Schachts (2) ausgelassenem Kühlgas geregelt wird.

10. Verfahren nach einem der vorangehenden Ansprüche, wobei die Schächte (2) jeweils zumindest eine Brennerlanze (10) aufweisen und wobei das Abgas in die Brennerlanze (10) eingeleitet wird.

11. Gleichstrom-Gegenstrom-Regenerativ-Schachtofen (1) zum Brennen und Kühlen von Material, wie Karbonatgesteinen, mit zwei Schächten (2), die abwechselnd als Brennschacht und als Regenerativschacht betreibbar und mittels eines Verbindungskanals (2) miteinander verbunden sind, wobei in dem als Brennschacht betriebenen Schacht eine Gleichstrombrennzone ausgebildet ist, wobei jeder Schacht (2) in Strömungsrichtung des Materials eine Vorwärmzone (21) zum Vorwärmen des Materials, eine Brennzone (20) zum Brennen des Materials und eine Kühlzone (22) zum Kühlen des Materials aufweist,
wobei jeder Schacht (2) einen innerhalb oder oberhalb der Vorwärmzone (21) angeordneten Abgasauslass (6) zum Auslassen von Abgas aus dem Schacht (2) aufweist,
**dadurch gekennzeichnet, dass**
zumindest ein Abgasauslass (6) mit einem Gaseinlass (12, 15) zum Einlassen von Gas in zumindest einen Schacht (2) verbunden ist.

12. Gleichstrom-Gegenstrom-Regenerativ-Schachtofen (1) nach Anspruch 11, wobei der Gaseinlass (12) in der Vorwärmzone (21) des als Brennschacht betriebenen Schachts (2) angeordnet ist.

13. Gleichstrom-Gegenstrom-Regenerativ-Schachtofen (1) nach Anspruch 11 oder 12, wobei der Gaseinlass (15) in dem Verbindungskanal (19) und/ oder der Brennzone (20) des Schachts (2) und/oder einem materialfreien Raum in dem Schacht (2) angeordnet ist.

14. Gleichstrom-Gegenstrom-Regenerativ-Schachtofen (1) nach einem der Ansprüche 11 bis 13, wobei zwischen dem Abgasauslass (6) und dem Gaseinlass (15) in dem Verbindungskanal (19) und/ oder der Brennzone (20) ein Wärmetauscher (43) und/ oder eine Heizeinrichtung (8), insbesondere eine elektrische Heizvorrichtung, eine Solareinrichtung oder ein Verbrennungsreaktor, zum Erwärmen des Abgases angeordnet ist.

15. Gleichstrom-Gegenstrom-Regenerativ-Schachtofen (1) nach einem der Ansprüche 11 bis 14, wobei die Kühlzone (22) einen Kühlgaseinlass (23) zum Einlassen von Kühlgas in die Kühlzone (22) und eine Kühlgasabzugseinrichtung (17) zum Abführen von Kühlgas aus dem Schacht (2) aufweist.

16. Gleichstrom-Gegenstrom-Regenerativ-Schachtofen (1) nach Anspruch 15, wobei die Kühlgasabzugseinrichtung (17) mit einem Wärmetauscher (43) zur Erwärmung des Abgases verbunden ist.

17. Gleichstrom-Gegenstrom-Regenerativ-Schachtofen (1) nach Anspruch 15 oder 16, wobei die Kühlgasabzugseinrichtung (17) einen materialfreien Raum innerhalb der Kühlzone (22) umfasst.

18. Gleichstrom-Gegenstrom-Regenerativ-Schachtofen (1) nach einem der Ansprüche 11 bis 17, wobei jeder Schacht (2) einen Verbrennungsgaseinlass (12) zum Einlassen von Verbrennungsgas in die Vorwärmzone (21) und/ oder die Brennzone (20) aufweist und wobei der Verbrennungsgaseinlass (12) mit einer Oxidationsmittelleitung (14) zur Leitung eines Oxidationsmittels in den Schacht (2) verbunden ist.

## Claims

1. A method for burning material, such as carbonate rocks, in a parallel-flow regenerative shaft kiln (1) having two shafts (2) which are operated alternately as a burning shaft and as a regenerative shaft and are connected to one another by means of a connecting channel (19), wherein the material flows through a material inlet (3) into a preheating zone (21) for preheating the material, a burning zone (20) for burning the material and a cooling zone (22) for cooling the material to a material outlet (40), wherein a cocurrent burning zone is formed in the shaft (2) operated as a burning shaft,
wherein a cooling gas is admitted into the cooling zone,
wherein exhaust gas is discharged from one of the shafts (2) via an exhaust gas outlet (6) arranged inside or above the preheating zone (21) and
**characterized in that**
the exhaust gas discharged from the shaft (2) via the exhaust gas outlet (6) is at least partially introduced into at least one of the shafts (2).

2. The method as claimed in claim 1, wherein the exhaust gas is introduced into the preheating zone (21) of the shaft (2) operated as a burning shaft.

3. The method as claimed in either of the preceding claims, wherein the exhaust gas is introduced into the connecting channel (19) and/or into the burning zone (20) of the shaft (2) operated as a regenerative shaft.

4. The method as claimed in claim 3, wherein, before being introduced into the connecting channel (19) or into the burning zone (20) of the shaft (2) operated as a regenerative shaft, the exhaust gas is heated in particular to a temperature of 900°C to 1100°C, preferably 1000°C.

5. The method as claimed in claim 4, wherein the exhaust gas is heated by means of a heat exchanger (43) and/or a heating device (8), in particular an electrical heating device, a solar device or a combustion reactor.

6. The method as claimed in any of the preceding claims, wherein the cooling gas heated in the cooling zone (22) is discharged from the cooling zone (22) of the shaft (2) via a cooling gas extraction device (17).

7. The method as claimed in claim 5, wherein the cooling gas discharged from the cooling zone (22) is fed to a heat exchanger (43) for heating the exhaust gas.

8. The method as claimed in any of the preceding claims, wherein an oxidizing agent is fed to the shaft operated as a burning shaft.

9. The method as claimed in either of the preceding claims 6 and 8, wherein the content of oxygen and/or CO₂ in the exhaust gas and/or the cooling gas is determined and wherein the amount of oxidizing agent fed to the burning shaft and/or the amount of cooling gas discharged from the cooling zone (22) of the shaft (2) via the cooling gas extraction device (17) is controlled.

10. The method as claimed in any of the preceding claims, wherein the shafts (2) each have at least one burner lance (10) and wherein the exhaust gas is introduced into the burner lance (10).

11. A parallel-flow regenerative shaft kiln (1) for burning and cooling material, such as carbonate rocks, having two shafts (2) which can be operated alternately as a burning shaft and as a regenerative shaft and are connected to one another by means of a connecting channel (2), wherein a cocurrent burning zone is formed in the shaft operated as a burning shaft,
wherein each shaft (2) has, in the direction of flow of the material, a preheating zone (21) for preheating the material, a burning zone (20) for burning the material and a cooling zone (22) for cooling the material,
wherein each shaft (2) has an exhaust gas outlet (6) arranged inside or above the preheating zone (21) for discharging exhaust gas from the shaft (2),
**characterized in that**
at least one exhaust gas outlet (6) is connected to a gas inlet (12, 15) for admitting gas into at least one shaft (2).

12. The parallel-flow regenerative shaft kiln (1) as claimed in claim 11, wherein the gas inlet (12) is arranged in the preheating zone (21) of the shaft (2) operated as a burning shaft.

13. The parallel-flow regenerative shaft kiln (1) as claimed in claim 11 or 12, wherein the gas inlet (15) is arranged in the connecting channel (19) and/or the burning zone (20) of the shaft (2) and/or a material-free space in the shaft (2).

14. The parallel-flow regenerative shaft kiln (1) as claimed in any of claims 11 to 13, wherein arranged between the exhaust gas outlet (6) and the gas inlet (15) in the connecting channel (19) and/or burning zone (20) is a heat exchanger (43) and/or a heating device (8), in particular an electrical heating device, a solar device or a combustion reactor, for heating the exhaust gas.

15. The parallel-flow regenerative shaft kiln (1) as claimed in any of claims 11 to 14, wherein the cooling zone (22) has a cooling gas inlet (23) for admitting cooling gas into the cooling zone (22) and a cooling gas extraction device (17) for discharging cooling gas from the shaft (2).

16. The parallel-flow regenerative shaft kiln (1) as claimed in claim 15, wherein the cooling gas extraction device (17) is connected to a heat exchanger (43) for heating the exhaust gas.

17. The parallel-flow regenerative shaft kiln (1) as claimed in claim 15 or 16, wherein the cooling gas extraction device (17) comprises a material-free space inside the cooling zone (22).

18. The parallel-flow regenerative shaft kiln (1) as claimed in any of claims 11 to 17, wherein each shaft (2) has a combustion gas inlet (12) for admitting combustion gas into the preheating zone (21) and/or the burning zone (20) and wherein the combustion gas inlet (12) is connected to an oxidizing agent line (14) for conducting an oxidizing agent into the shaft (2).

## Revendications

1. Procédé de combustion de matières, telles que des roches carbonatées, dans un four à arbre régénératif à flux parallèle (1) comportant deux arbres (2) fonctionnant alternativement comme arbre de combustion et comme arbre de régénération et reliés l'un à l'autre au moyen d'un canal de connexion (19), dans lequel le matériau passe par une entrée de matériau (3) dans une zone de préchauffage (21) pour préchauffer le matériau, une zone de combustion (20) pour brûler le matériau et une zone de refroidissement (22) pour refroidir le matériau jusqu'à une sortie de matériau (40), dans lequel une zone de combustion à contre-courant est formée dans l'arbre (2) fonctionnant comme un arbre de combustion,
dans laquelle un gaz de refroidissement est admis dans la zone de refroidissement,
le gaz d'échappement est évacué de l'un des arbres (2) par une sortie de gaz d'échappement (6) située à l'intérieur ou au-dessus de la zone de préchauffage (21) et
**caractérisé par le fait que**
le gaz d'échappement évacué de l'arbre (2) par la sortie de gaz d'échappement (6) est au moins partiellement introduit dans au moins un des arbres (2).

2. Procédé selon la revendication 1, dans lequel les gaz d'échappement sont introduits dans la zone de préchauffage (21) de l'arbre (2) utilisé comme arbre de combustion.

3. Procédé selon l'une des revendications précédentes, dans lequel les gaz d'échappement sont introduits dans le canal de connexion (19) et/ou dans la zone de combustion (20) de l'arbre (2) fonctionnant comme un arbre régénératif.

4. Procédé selon la revendication 3, dans lequel, avant d'être introduit dans le canal de raccordement (19) ou dans la zone de combustion (20) de l'arbre (2) fonctionnant comme un arbre régénérateur, le gaz d'échappement est chauffé en particulier à une température de 900°C à 1100°C, de préférence 1000°C.

5. Procédé selon la revendication 4, dans lequel les gaz d'échappement sont chauffés au moyen d'un échangeur de chaleur (43) et/ou d'un dispositif de chauffage (8), en particulier un dispositif de chauffage électrique, un dispositif solaire ou un réacteur de combustion.

6. Procédé selon l'une quelconque des revendications précédentes, dans lequel le gaz de refroidissement chauffé dans la zone de refroidissement (22) est évacué de la zone de refroidissement (22) de l'arbre (2) par un dispositif d'extraction du gaz de refroidissement (17).

7. Procédé selon la revendication 5, dans lequel le gaz de refroidissement évacué de la zone de refroidissement (22) est acheminé vers un échangeur de chaleur (43) pour chauffer les gaz d'échappement.

8. Procédé selon l'une quelconque des revendications précédentes, dans lequel un agent oxydant est acheminé vers l'arbre fonctionnant comme un arbre de combustion.

9. Procédé selon l'une des revendications précédentes 6 et 8, dans lequel la teneur en oxygène et/ou en CO2 des gaz d'échappement et/ou du gaz de refroidissement est déterminée et dans lequel la quantité d'agent oxydant envoyée à l'arbre de combustion et/ou la quantité de gaz de refroidissement évacuée de la zone de refroidissement (22) de l'arbre (2) via le dispositif d'extraction du gaz de refroidissement (17) est contrôlée.

10. Procédé selon l'une quelconque des revendications précédentes, dans lequel les arbres (2) comportent chacun au moins une lance de brûleur (10) et dans lequel le gaz d'échappement est introduit dans la lance de brûleur (10).

11. Four à arbre régénérateur à flux parallèle (1) pour la combustion et le refroidissement de matériaux, tels que des roches carbonatées, comportant deux arbres (2) pouvant être utilisés alternativement comme arbre de combustion et comme arbre régénérateur et reliés l'un à l'autre au moyen d'un canal de raccordement (2), dans lequel une zone de combustion simultanée est formée dans l'arbre utilisé comme arbre de combustion,
dans lequel chaque arbre (2) possède, dans le sens d'écoulement du matériau, une zone de préchauffage (21) pour préchauffer le matériau, une zone de combustion (20) pour brûler le matériau et une zone de refroidissement (22) pour refroidir le matériau,
dans lequel chaque arbre (2) possède une sortie de gaz d'échappement (6) disposée à l'intérieur ou au-dessus de la zone de préchauffage (21) pour évacuer les gaz d'échappement de l'arbre (2),
**caractérisé par le fait que**
au moins une sortie de gaz d'échappement (6) est reliée à une entrée de gaz (12, 15) pour l'admission de gaz dans au moins un arbre (2).

12. Four à arbre régénératif à flux parallèle (1) selon la revendication 11, dans lequel l'entrée de gaz (12) est disposée dans la zone de préchauffage (21) de l'arbre (2) utilisé comme arbre de combustion.

13. Four à arbre régénératif à flux parallèle (1) selon la revendication 11 ou 12, dans lequel l'entrée de gaz (15) est disposée dans le canal de connexion (19) et/ou la zone de combustion (20) de l'arbre (2) et/ou un espace libre de matière dans l'arbre (2).

14. Four à arbre régénératif à flux parallèle (1) selon l'une quelconque des revendications 11 à 13, dans lequel un échangeur de chaleur (43) et/ou un dispositif de chauffage (8), en particulier un dispositif de chauffage électrique, un dispositif solaire ou un réacteur de combustion, est disposé entre la sortie des gaz d'échappement (6) et l'entrée des gaz (15) dans le canal de raccordement (19) et/ou la zone de combustion (20), pour chauffer les gaz d'échappement.

15. Four à arbre régénératif à flux parallèle (1) selon l'une des revendications 11 à 14, dans lequel la zone de refroidissement (22) possède une entrée de gaz de refroidissement (23) pour admettre le gaz de refroidissement dans la zone de refroidissement (22) et un dispositif d'extraction de gaz de refroidissement (17) pour évacuer le gaz de refroidissement de l'arbre (2).

16. Four à arbre régénératif à flux parallèle (1) selon la revendication 15, dans lequel le dispositif d'extraction du gaz de refroidissement (17) est relié à un échangeur de chaleur (43) pour chauffer le gaz d'échappement.

17. Four à arbre régénératif à flux parallèle (1) selon la revendication 15 ou 16, dans lequel le dispositif d'extraction du gaz de refroidissement (17) comprend un espace sans matériau à l'intérieur de la zone de refroidissement (22).

18. Le four à arbre régénératif à flux parallèle (1) selon l'une des revendications 11 à 17, dans lequel chaque arbre (2) a une entrée de gaz de combustion (12) pour admettre le gaz de combustion dans la zone de préchauffage (21) et/ou la zone de combustion (20) et dans lequel l'entrée de gaz de combustion (12) est connectée à une ligne d'agent oxydant (14) pour conduire un agent oxydant dans l'arbre (2).
